# EUROPEAN PATENT APPLICATION

(11) **EP 4 397 491 A1**
(43) Date of publication of application: **10.07.2024**
(21) Application number: 22864740.0
(22) Date of filing: 02.09.2022
(51) Int. Cl.: B32B 27/32, B65D 65/40

(54) **LAMINATE, PACKAGING BODY, AND PACKAGING ARTICLE**

(30) Priority: 03.09.2021 JP 2021143861; 06.09.2021 JP 2021144684; 06.09.2021 JP 2021144685; 06.09.2021 JP 2021144686; 21.09.2021 JP 2021153039; 26.11.2021 JP 2021192353; 26.11.2021 JP 2021192356; 30.11.2021 JP 2021194423
(71) Applicant: Toppan Holdings Inc., Tokyo 110-0016 (JP)
(72) Inventor: SHIOKAWA, Shunichi, Tokyo 110-0016 (JP); EJIMA, Yuki, Tokyo 110-0016 (JP); MATSUHISA, Kenji, Tokyo 110-0016 (JP); TAKEI, Ryo, Tokyo 110-0016 (JP); TANAKA, Ryota, Tokyo 110-0016 (JP)
(74) Representative: TBK
(86) International application number: PCT/JP2022/033184
(87) International publication number: WO 2023/033158

(57) **Abstract**

There is provided a laminate containing polyethylene and having recyclability, the laminate having excellent heat resistance or strength, and a package and a packaged article including the laminate. The laminate (10A1) includes a substrate layer (1), an adhesive agent layer (3), and a sealant layer (2) in this order, the substrate layer (1) and the sealant layer (2) containing polyethylene, the substrate layer (1) having a crystallinity of 35% or more, the crystallinity being a ratio of a crystal peak area to a total peak area, the crystallinity being measured at a diffraction angle in a range of 10° to 30° by a parallel beam method of X-ray diffraction.

## Description

### FIELD

The present invention relates to a laminate, a package, and a packaged article.

### BACKGROUND

Packaging materials used for packaging bags and the like are required to have various properties depending on the application. Examples of the required properties include heat resistance, transparency, heat-sealing property, strength, gas barrier property, puncture resistance, visibility, bag forming suitability, printability, transportation suitability, and the like as a packaging material. In order to sufficiently satisfy various performances as described above, conventionally, a plurality of types of synthetic resin films having different characteristics are generally used in combination (see Patent Literature 1 for example).

In recent years, with growing demand for the construction of a recycling-oriented society, packaging materials having high recyclability are needed. In general, high recyclability is expected when the ratio of the main resin contained in the packaging material is 90 mass% or more. However, the conventional packaging material is composed of different kinds of resin materials as described above, and it is difficult to separate the packaging material for each resin material after use, so that the packaging material cannot be recycled as each material. Therefore, even if a package formed using a conventional packaging material is collected with an effort, the package is not only burned and utilized as a heat source, and is currently incompatible from the viewpoint of global environment protection in recent years.

From the viewpoint of recyclability, a technique for forming a packaging material having a high polyethylene content and a packaging film to have a layer configuration as simple as possible has been proposed (see Patent Literatures 2 and 3 for example). However, for example, there is a problem that it remains in the use of light packaging in terms of strength, heat resistance, and the like, and there is room for improvement to satisfy various properties required depending on the use as a packaging material.

### CITATION LIST

### PATENT LITERATURE

Patent Literature 1: Jpn. Pat. Appln. KOKAI Publication No. 2009-241359
Patent Literature 2: Jpn. Pat. Appln. KOKAI Publication No. 2020-196791
Patent Literature 3: Jpn. Pat. Appln. KOKAI Publication No. 2020-55157

### SUMMARY

An object of the present invention is to provide a laminate containing polyethylene and having recyclability, the laminate having excellent heat resistance or strength, and a package and a packaged article including the laminate.

According to one aspect of the present invention, there is provided a laminate including a substrate layer, an adhesive agent layer, and a sealant layer in this order, the substrate layer and the sealant layer containing polyethylene, the substrate layer having a crystallinity of 35% or more, the crystallinity being a ratio of a crystal peak area to a total peak area, the crystallinity being measured at a diffraction angle in a range of 10° to 30° by a parallel beam method of X-ray diffraction.

According to another aspect of the present invention, there is provided the laminate according to the above aspect, further including an intermediate layer placed between the substrate layer and the sealant layer and containing polyethylene.

According to still another aspect of the present invention, there is provided the laminate according to the above aspect, in which the intermediate layer has a crystallinity of 35% or more, the crystallinity being a ratio of a crystal peak area to a total peak area, the crystallinity being measured at a diffraction angle in a range of 10° to 30° by the parallel beam method of X-ray diffraction.

According to still another aspect of the present invention, there is provided the laminate according to the above aspect, in which the intermediate layer has a crystallinity of less than 35%, the crystallinity being a ratio of a crystal peak area to a total peak area, the crystallinity being measured at a diffraction angle in a range of 10° to 30° by the parallel beam method of X-ray diffraction.

According to still another aspect of the present invention, there is provided the laminate according to any one of the above aspects further including a protective layer as an outermost layer, the protective layer facing the sealant layer with the substrate layer placed between the protective layer and the sealant layer.

According to still another aspect of the present invention, there is provided the laminate according to the above aspect, in which the protective layer contains a thermosetting resin.

According to still another aspect of the present invention, there is provided the laminate according to any one of the above aspects, in which the substrate layer is a biaxially stretched film.

Alternatively, according to another aspect of the present invention, there is provided the laminate according to any one of the above aspects, in which the substrate layer is an uniaxially stretched film.

According to still another aspect of the present invention, there is provided the laminate according to any one of the above aspects further including a gas barrier layer placed between the substrate layer and the sealant layer.

According to still another aspect of the present invention, there is provided the laminate according to any one of the aspects, in which the adhesive agent layer has a gas barrier property.

According to still another aspect of the present invention, there is provided the laminate according to any one of the above aspects, wherein the sealant layer is white.

According to still another aspect of the present invention, there is provided the laminate according to any one of the above aspects, in which a ratio of polyethylene in the laminate is 90 mass% or more.

According to still another aspect of the present invention, there is provided a laminate according to any one of the aspects, including a first adhesive agent layer and a second adhesive agent layer as the adhesive agent layer, the first adhesive agent layer being placed between the substrate layer and the intermediate layer, the second adhesive agent layer being placed between the intermediate layer and the sealant layer.

According to still another aspect of the present invention, there is provided a package including the laminate according to any one of the above aspects

According to still another aspect of the present invention, there is provided the package according to the above aspect, the package being a standing pouch.

According to still another aspect of the present invention, there is provided a packaged article including the package according to any one of the above aspects and a content contained in the package.

### ADVANTAGEOUS EFFECTS OF INVENTION

According to the present invention, a laminate containing polyethylene and having recyclability and the laminate being excellent in heat resistance and strength, and a package and a packaged article including the laminate are provided.

### BRIEF DESCRIPTION OF THE DRAWINGS

FIG. 1 is a cross-sectional view schematically illustrating a laminate according to a first embodiment of the present invention.
FIG. 2 is a cross-sectional view schematically illustrating a modification of the laminate illustrated in FIG. 1.
FIG. 3 is a cross-sectional view schematically illustrating a laminate according to a second embodiment of the present invention.
FIG. 4 is a cross-sectional view schematically illustrating a laminate according to a third embodiment of the present invention.
FIG. 5 is a cross-sectional view schematically illustrating a laminate according to a fourth embodiment of the present invention.
FIG. 6 is a cross-sectional view schematically illustrating a laminate according to a fifth embodiment of the present invention.
FIG. 7 is a cross-sectional view schematically illustrating a laminate according to a sixth embodiment of the present invention.
FIG. 8 is a cross-sectional view schematically illustrating a laminate according to a seventh embodiment of the present invention.
FIG. 9 is a cross-sectional view schematically illustrating a laminate according to an eighth embodiment of the present invention.
FIG. 10 is a view schematically illustrating a packaged article according to a ninth embodiment of the present invention.
FIG. 11 is a view schematically illustrating a packaged article according to a tenth embodiment of the present invention.
FIG. 12 is a view schematically illustrating a packaged article according to an eleventh embodiment of the present invention.

### DETAILED DESCRIPTION

Hereinafter, embodiments according to the present invention will be described with reference to the drawings. In the embodiments described below, any one of the above aspects is further embodied. The matters described below can be incorporated into each of the aspects alone or in combination of two or more thereof.

In addition, the following embodiments exemplify configuration for embodying the technical idea of the present invention, and the technical idea of the present invention is not limited by the material, shape, structure, and the like of the following constituent members. Various modifications can be made to the technical idea of the present invention within the technical scope defined by the claims described in CLAIMS.

Note that elements having the same or similar functions are denoted by the same reference numerals in the drawings to be referred to below, and redundant description will be omitted. Therefore, the matters mentioned in one embodiment can also be applied to other embodiments unless otherwise specified. In addition, the drawings are schematic, and a relationship between a dimension in a certain direction and a dimension in another direction, a relationship between a dimension of a certain member and a dimension of another member, and the like may be different from actual ones.

### <1> First embodiment

### <1.1> Laminate

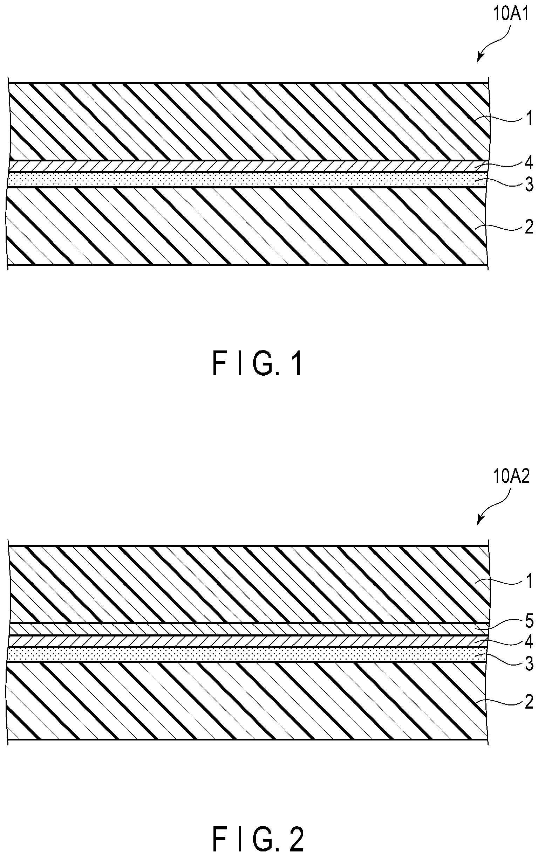

FIG. 1 is a cross-sectional view schematically illustrating a laminate according to a first embodiment of the present invention.

A laminate 10A1 illustrated in FIG. 1 includes a substrate layer 1, a printed layer 4, an adhesive agent layer 3 and a sealant layer 2 in this order.

The substrate layer 1 and the sealant layer 2 contain polyethylene. In the laminate 10A1, the ratio of polyethylene is preferably 90 mass% or more. Here, the ratio of polyethylene in the laminate means the ratio of the total amount of polyethylene to the total amount of resin materials in each layer constituting the laminate. When the ratio of polyethylene is 90 mass% or more, high recyclability can be achieved.

### <1.2> Substrate layer

The substrate layer 1 contains polyethylene. Preferably, the substrate layer 1 is made of polyethylene. The substrate layer 1 has a crystallinity of 35% or more, which is a ratio of a crystal peak area to a total peak area measured in a diffraction angle range of 10° to 30° by a parallel beam method of X-ray diffraction. Here, the crystallinity of the substrate layer 1 is a value obtained by a measurement method to be described later.

In the laminate 10A1 according to the present invention, the crystallinity of the substrate layer 1 is 35% or more, whereby the heat resistance of the substrate layer 1 is improved. As a result, even when bag forming processing is performed in the bag forming machine using the laminate 10A1 as a packaging material, it is not necessary to reduce the bag forming speed, and excellent processing suitability is obtained.

When the crystallinity of the substrate layer 1 is 35% or more, elongation of the substrate layer 1 is reduced, and printability is improved.

The polyethylene contained in the substrate layer 1 may be a homopolymer of ethylene or a copolymer of ethylene and another monomer. In a case where the polyethylene is a copolymer of ethylene and another monomer, the ratio of ethylene in the copolymer is, for example, 80 mol% or more.

The another monomer is, for example, an α-olefin. According to one example, the α-olefin has carbon atoms in a range of 3 to 20. Such an α-olefin is, for example, propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, or 6-methyl-1-heptene.

The polyethylene may be a copolymer of ethylene and one of vinyl acetate and an acrylic acid ester.

The substrate layer 1 is, for example, high-density polyethylene (HDPE), medium-density polyethylene (MDPE), low-density polyethylene (LDPE), linear low-density polyethylene (LLDPE), or very-low-density polyethylene (VLDPE) .

Here, the density of the high-density polyethylene is 0.942 g/cm³ or more, the density of the medium-density polyethylene is 0.930 g/cm³ or more and less than 0.942 g/cm³, the density of the low-density polyethylene is 0.910 g/cm³ or more and less than 0.930 g/cm³, the density of the linear low-density polyethylene is 0.910 g/cm³ or more and less than 0.930 g/cm³, and the density of the very-low-density polyethylene is less than 0.910 g/cm³.

Note that the density is a value obtained by a method in accordance with JIS K7112: 1999.

The polyethylene contained in the substrate layer 1 may be biomass-derived polyethylene. As the biomass-derived polyethylene, for example, green polyethylene (manufactured by Braskem S.A.) can be used.

Alternatively, the polyethylene contained in the substrate layer 1 may be polyethylene recycled by mechanical recycling. Here, the mechanical recycling is to perform decontamination of the polyethylene film by pulverizing the collected polyethylene film and the like, then subjecting the pulverized film to alkaline cleaning to remove stains and foreign matters on the film surface, and then drying the film at a high temperature and under a reduced pressure to diffuse contaminants remaining inside the film.

Alternatively, the polyethylene contained in the substrate layer 1 may be polyethylene recycled by chemical recycling.

The melting point of the substrate layer 1 is preferably in the range of 100°C to 140°C, and more preferably in the range of 120°C to 140°C. Note that the melting point is a value obtained by a method in accordance with JIS K7121-1987.

The substrate layer 1 may be an unstretched film or a stretched film. The substrate layer 1 is desirably a stretched film. When the substrate layer 1 is a stretched film in addition to having a crystallinity of 35% or more, the following effects are obtained. That is, it is particularly excellent in heat resistance and strength. In addition, the elongation of the substrate layer 1 is reduced, and the printability is improved. Here, in the present specification, the term "film" does not include the concept of thickness.

When the substrate layer 1 is a stretched film, the substrate layer 1 may be a uniaxially stretched film or a biaxially stretched film. When a uniaxially stretched film is used as the substrate layer 1, heat resistance at the time of bag formation, that is, sealing property described later is further improved. When a biaxially stretched film is used as the substrate layer 1, the drop resistance of a packaged article using the laminate 10A1 as a packaging material is improved.

Whether the stretched film is a uniaxially stretched film or a biaxially stretched film can be determined by performing in-plane measurement by a wide angle X-ray diffraction method as described below. The X-ray diffraction pattern obtained by this measurement includes information on the degree of orientation of molecular chains present on the film surface.

When the polymer film is uniaxially stretched, a higher-order structure called a shish kebab structure appears. The shish kebab structure includes a shish structure which is an elongated chain crystal and a kebab structure which is a lamellar crystal. In the uniaxially stretched film, this higher-order structure is arranged with a high degree of order, and therefore the X-ray diffraction pattern obtained by the above measurement on the uniaxially stretched film will include a sharp diffraction peak. That is, when the above measurement is performed on a uniaxially stretched film, a clear diffraction peak appears. The "clear diffraction peak" means a diffraction peak having a half-value width of less than 10°.

On the other hand, in the production of a biaxially stretched film, the film is stretched in a specific direction, and then stretched in a direction perpendicular to the previous direction. Therefore, although the above-described higher-order structure is generated by the first stretching, this higher-order structure is disturbed by the second stretching. Therefore, when the above measurement is performed on a biaxially stretched film, the diffraction peak is broad in the X-ray diffraction pattern obtained by this measurement. In other words, when the above measurement is performed on a biaxially stretched film, a clear diffraction peak is not seen.

As described above, the X-ray diffraction pattern obtained by the above measurement is different between the uniaxially stretched film and the biaxially stretched film. Therefore, based on this, whether the stretched film is a uniaxially stretched film or a biaxially stretched film can be determined.

The film can be produced by a known production method such as a casting method or an inflation method. It is also possible to use, as the substrate layer 1, a polyethylene film having a multilayer structure obtained by extruding polyethylene having different densities by a co-extrusion method. The stretched film is obtained, for example, by stretching a film obtained by forming a film of polyethylene by a T-die method, an inflation method, or the like. The substrate layer 1 may be a uniaxially stretched film or a biaxially stretched film.

The haze of the substrate layer 1 is preferably 20% or less, and more preferably 10% or less. The haze is a value obtained by a method in accordance with JIS K7136: 2000.

The thickness of the substrate layer 1 is preferably in the range of 10 µm to 200 µm. The thickness of the substrate layer 1 is, for example, in a range of 10 µm to 50 µm, in a range of 15 µm to 50 um, or in a range of 12 um to 35 um. When the substrate layer 1 is too thin, the strength of the laminate 10A1 tends to decrease. In addition, when the substrate layer 1 is too thick, the processing suitability of the laminate 10A1 tends to be deteriorated.

The substrate layer 1 is preferably surface-treated. According to this treatment, the adhesion between the substrate layer 1 and the layer adjacent to the substrate layer 1 can be improved.

The surface treatment method is not particularly limited. Examples of the surface treatment include physical treatments such as corona discharge treatment, ozonation, low temperature plasma treatment using oxygen gas and/or nitrogen gas, glow discharge treatment, and chemical treatments such as oxidation using a chemical agent.

The substrate layer 1 may further contain an additive. Examples of the additive include cross-linking agents, antioxidants, antiblocking agents, lubricants (slip agents), ultraviolet absorbers, light stabilizers, fillers, reinforcing agents, antistatistic agents, pigments, modifier resins, and the like.

The ratio of polyethylene in the substrate layer 1 is preferably 50 mass% or more, and more preferably 80 mass% or more. According to one example, the substrate layer 1 is made of polyethylene. According to another example, the substrate layer 1 is made of polyethylene and an additive.

The substrate layer 1 may be colored, for example, may be white.

As described above, the substrate layer 1 has a crystallinity of 35% or more. The printed layer 4 is disposed on the inner surface side of the substrate layer 1, but an image such as a design or text displayed on the printed layer 4 can be visually recognized with good visibility. From this viewpoint, the crystallinity of the substrate layer 1 is preferably 40% or more, and more preferably 50% or more. The crystallinity is, by way of example, in the range of 50% to 75%. Further, the polyethylene-containing layer having a crystallinity of 35% or more is also excellent in puncture resistance as described below. From this viewpoint, the crystallinity of the substrate layer 1 is preferably 40% or more, and more preferably 50% or more.

Polyethylene is a crystalline polymer, and therefore has both a crystalline part and an amorphous part. Polyethylene having a high crystallinity has a high ratio of crystalline portions. Since this crystalline portion dominates the elastic portion in the viscoelastic behavior of the resin, the rigidity of the film is improved when the crystallinity is high.

Due to the influence of this viscoelastic behavior, in a film having a high crystallinity, strain associated with plastic deformation of the resin also increases. As a result, an effect of suppressing deformation of the resin against distortion generated by an instantaneous impact applied to the film is obtained, and breakage hardly occurs. Therefore, the laminate 10A1 including the substrate layer 1 containing polyethylene and having a crystallinity of 35% or more is excellent in resistance to instantaneous impact, and a packaged article using the laminate 10A1 as a packaging material is less likely to be damaged (bag breakage) due to dropping. That is, excellent bag breakage resistance is obtained.

The crystallinity of the substrate layer 1 can be adjusted by controlling the degree of stretching of the polyethylene film used for the substrate layer 1, the thermal history during or after film production, and the like. For example, slow cooling after film formation increases the crystallinity, and rapid cooling decreases the crystallinity. In addition, it is also possible to improve the crystallinity by blending an additive such as a crystal nucleating agent.

### <Method for Measuring Crystallinity>

The crystallinity of the substrate layer 1 is measured by an X-ray diffraction method using a parallel beam method. Hereinafter, an example of a method for measuring the crystallinity will be described.

First, the X-ray diffraction pattern of the substrate layer 1 is obtained by performing 2θ/θ scanning in a range of a diffraction angle of 10° to 30° by out-of-plane measurement using a wide-angle X-ray diffractometer manufactured by Rigaku Corporation. The characteristic X-ray CuKα is used as the X-ray, the X-ray is parallelized by a multilayer film mirror, the X-ray is incident on the substrate layer 1, and a scintillation detector to which a flat plate collimator is attached is used as the light receiving unit.

From the obtained X-ray diffraction pattern, the peak area of the crystal component and the halo pattern area of the amorphous component are determined, and the ratio of the peak area of the crystal component to the total area is calculated as the crystallinity.

In a case where the substrate layer 1 has a plurality of layers, the crystallinity of any one of the outermost surfaces of the substrate layer 1 is measured.

In a case where the substrate layer 1 is a polyethylene film, when scanning is performed at a diffraction angle in the range of 10° to 30°, two sharp peaks of crystal components corresponding to the (110) plane and the (200) plane and a broad halo pattern of amorphous components are observed. When these are separated and analyzed to calculate the areas of the peaks of the crystal components and the area of the halo pattern of the amorphous components, the crystallinity is obtained from the following formula (1). Crystallinity = peak area of crystal component / (peak area of crystal component + halo pattern area of amorphous component)

A concentration method is known as an X-ray diffraction method other than the parallel beam method, but in the concentration method, in the case of a sample having irregularities on the surface of a resin film or the like, influence on the measurement result such as peak spread due to positional deviation of the measurement surface is likely to occur. On the other hand, in the parallel beam method, even in the case of a sample having irregularities on the surface, the influence of the positional deviation of the measurement surface on the measurement result is small.

On the other hand, the substrate layer 1 is preferably uniaxially stretched or biaxially stretched, but as described above, an in-plane method by an X-ray diffraction method can be used as a determination method of these. In this in-plane method, an X-ray incident angle θ and an angle 20 at which a diffracted X-ray is detected by a detector are fixed to an angle θ and an angle 2θ, respectively, when a diffraction peak corresponding to a specific crystal plane in the above-described out-of-plane method, for example, a diffraction peak corresponding to a (110) plane of a polyethylene film is detected, and in this state, a film to be measured is scanned in an in-plane direction to obtain a diffraction pattern.

When in-plane measurement is performed on a uniaxially stretched film uniaxially stretched in the machine direction (MD), a diffraction pattern having a sharp diffraction peak corresponding to the (110) plane at a position where the angle 20 is about ±90° can be obtained when the MD direction is defined as 0°. On the other hand, in the case of a biaxially stretched film, since the higher-order structure obtained by uniaxial stretching is disturbed by the second stretching and the anisotropy is reduced, a diffraction pattern having a sharp diffraction peak corresponding to this (110) plane cannot be obtained. Therefore, in-plane measurement can be mentioned as one of methods for distinguishing a uniaxially stretched film and a biaxially stretched film from each other.

### <1.3> Sealant layer

The sealant layer 2 faces the substrate layer 1. The sealant layer 2 contains polyethylene. Preferably, the sealant layer 2 is made of polyethylene. As the polyethylene, for example, those described above for the polyethylene contained in the substrate layer 1 can be used. The sealant layer 2 is preferably low-density polyethylene (LDPE), linear low-density polyethylene (LLDPE), or very-low-density polyethylene (VLDPE), and more preferably linear low-density polyethylene.

The polyethylene is preferably biomass-derived polyethylene or recycled polyethylene from the viewpoint of environmental load.

The sealant layer 2 may further contain the above-described additives.

The ratio of polyethylene in the sealant layer 2 is preferably 50 mass% or more, and more preferably 80 mass% or more. According to one example, the sealant layer 2 is made of polyethylene. According to another example, the sealant layer 2 is made of polyethylene and an additive.

The sealant layer 2 may be transparent or opaque. In the latter case, the sealant layer 2 is preferably white. When the laminate 10A1 in which the sealant layer 2 is transparent is used for a package, the contents thereof are easily visually recognized. When the laminate 10A1 in which the sealant layer 2 is opaque is used for a package, the content does not hinder the visual recognition of the image displayed on the printed layer 4. In particular, the white sealant layer 2 improves the visibility of an image displayed on the printed layer 4.

The thickness of the sealant layer 2 can be appropriately set in consideration of the shape of the packaging bag to be produced, the mass of the content to be accommodated, and the like, but it can be set to, for example, 30 to 150 µm.

The sealant layer 2 is, for example, an unstretched polyethylene resin film or a layer formed by melt extrusion of polyethylene.

### <1.4> Printed layer

The printed layer 4 is provided on a surface of the substrate layer 1 facing the sealant layer 2, that is, on a back surface of the substrate layer 1. Note that the position where the printed layer 4 is provided is not limited. In other words, the printed layer 4 may be provided on the surface of the substrate layer 1, or may be provided at any position between the substrate layer 1 and the sealant layer 2. For example, when the laminate 10A1 further includes an intermediate layer described later, the printed layer 4 may be provided on any surface of the intermediate layer. The laminate 10A1 may include a plurality of printed layers. The printed layer 4 may be omitted.

The printing ink used for the printed layer 4 is not particularly limited as long as it has adhesiveness to polyethylene. The printed layer 4 is made of, for example, ink in which additives such as various pigments, extender pigments, plasticizers, desiccants, and stabilizers are added to conventionally used ink binder resins such as urethane-based, acrylic-based, nitrocellulose-based, rubber-based, and vinyl chloride-based ink binder resins. As the printing ink, it is preferable to use a biomass-derived ink. As the printing method, for example, known printing methods such as an offset printing method, a gravure printing method, a flexographic printing method, and a silk screen printing method, and known coating methods such as roll coating, knife edge coating, and gravure coating can be used. In addition, a light-shielding ink can also be preferably used. Examples thereof include white, black, silver ink, sepia, and the like.

### <1.5> Adhesive agent layer

In the adhesive agent layer 3, the substrate layer 1 provided with the printed layer 4 and the sealant layer 2 are bonded to each other. The adhesive agent layer 3 contains at least one type of adhesive. The adhesive may be a one-component curable adhesive, a two-component curable adhesive, or a non-curable adhesive. The adhesive may be a solventless type adhesive or a solvent type adhesive.

Examples of the adhesive include polyether-based adhesives, polyester-based adhesives, silicone-based adhesives, epoxy-based adhesives such as polyamine-based adhesives, urethane-based adhesives, rubber-based adhesives, vinyl-based adhesives, silicone-based adhesives, epoxy-based adhesives, phenol-based adhesives, and olefin-based adhesives. An adhesive containing a biomass component can also be preferably used. The adhesive is preferably a polyamine-based adhesive having gas barrier property or a urethane-based adhesive. Specific examples of the gas barrier adhesive include "Maxive" manufactured by MITSUBISHI GAS CHEMICAL COMPANY, INC., and "Paslim" manufactured by DIC Corporation.

The adhesive agent layer 3 may be a cured product of a resin composition containing a polyester polyol, an isocyanate compound, and a phosphoric acid-modified compound. Such an adhesive agent layer 3 can further improve the oxygen barrier properties and the water vapor barrier properties of the laminate 10A1.

The thickness of the adhesive agent layer 3 is preferably in the range of 0.1 um to 20 um, more preferably in the range of 0.5 um to 10 µm, and still more preferably in the range of 1 to 5 µm.

The adhesive agent layer 3 can be formed by applying and drying the adhesive agent layer 3 on the sealant layer 2 by a conventionally known method such as a direct gravure roll coat method, a gravure roll coat method, a kiss coat method, a reverse roll coat method, a fountain method or a transfer roll coat method.

### <1.6> Effects

The laminate 10A1 described above is excellent in heat resistance and recyclability. This will be described below.

The production of a packaging bag generally includes a step of bringing sealant layers of a laminate into contact with each other, sandwiching a portion where the sealant layers are in contact with each other with a jig, and applying pressure and heat to thermally weld (heat-seal) the contact portion. The jig of the heat sealing machine has a high temperature, and the surface of the substrate layer in direct contact with the jig is exposed to a high temperature. As a result, when polyethylene having poor heat resistance is used for the substrate layer, there may be a problem that the surface of the substrate layer is affected by heat and adheres to the jig. Therefore, the conventional laminate using polyethylene for the substrate layer has a problem that the proper condition of the bag production temperature is narrow and the productivity is poor.

As a result of measuring the crystallinity described above for various polyethylenes, the inventors of the present invention have found that when the crystallinity of the substrate layer 1 is 35% or more, the substrate layer 1 exhibits excellent heat resistance, and therefore the laminate 10A1 also exhibits excellent heat resistance, and in particular, it is found that excellent heat sealing suitability is achieved. In the laminate 10A1, polyethylene, which is generally said to have poor heat resistance, is used as the substrate layer 1. However, by setting the crystallinity of the substrate layer 1 to 35% or more, the temperature range of heat sealing performed for bag production is expanded, so that productivity is not deteriorated, and furthermore, appearance defects due to shrinkage of a seal portion are not caused, and a package can be produced.

Since the laminate 10A1 having such excellent heat resistance uses the crystallinity of the substrate layer 1 as an index, the surface characteristics of the laminate 10A1 can be easily measured and grasped, and the quality as a packaging material can be easily stabilized.

Furthermore, since the laminate 10A1 includes the substrate layer 1 and the sealant layer 2 each containing polyethylene as a main component, it is easy to set the ratio of polyethylene to 90 mass% or more. Therefore, the laminate 10A1 is also excellent in recyclability.

### <1.7> Modification

The laminate 10A1 can be modified in various ways.

FIG. 2 is a cross-sectional view schematically illustrating a modification of the laminate illustrated in FIG. 1. A laminate 10A2 illustrated in FIG. 2 is the same as the laminate 10A1 except that an inorganic compound layer 5 interposed between the substrate layer 1 and the printed layer 4 is further included. The inorganic compound layer 5 is a thin film made of an inorganic compound, for example, an inorganic oxide such as aluminum oxide or silicon oxide, and functions as a gas barrier layer that suppresses permeation of oxygen and water vapor.

### <Inorganic compound layer>

The inorganic compound layer 5 may be formed by coating, or may be formed by depositing an inorganic compound.

Examples of the inorganic compound contained in the inorganic compound layer 5 include metal oxides such as aluminum oxide, silicon oxide, magnesium oxide, tin oxide, and the like. The inorganic compound layer 5 is preferably an evaporated film made of, for example, a metal oxide. From the viewpoint of transparency and barrier properties, the metal oxide may be selected from the group consisting of aluminum oxide, silicon oxide, and magnesium oxide. Furthermore, considering the cost, the metal oxide is selected from aluminum oxide, silicon oxide. Furthermore, silicon oxide is more preferably used as the metal oxide from the viewpoint of excellent tensile stretchability during processing. By forming the inorganic compound layer 5 as an evaporated film made of a metal oxide, high barrier property can be obtained with a very thin layer in a range not affecting the recyclability of the laminate 10A2.

Since the evaporated film made of a metal oxide has transparency, there is an advantage that a user who holds a packaging material made of the laminate is less likely to erroneously recognize that a metal foil is used as compared with an evaporated film made of a metal.

The thickness of the evaporated film made of aluminum oxide is preferably 5 nm or more and 30 nm or less. When the film thickness is 5 nm or more, sufficient gas barrier property can be obtained. When the film thickness is 30 nm or less, it is possible to suppress generation of cracks caused by deformation of the thin film due to internal stress and to suppress deterioration of gas barrier property. If the film thickness exceeds 30 nm, the cost tends to increase due to an increase in the amount of material used, an increase in the film formation time, and the like, which is not preferable from the economic viewpoint. From the same viewpoint as described above, the thickness of the evaporated film made of aluminum oxide is more preferably 7 nm or more and 15 nm or less.

The film thickness of the evaporated film made of silicon oxide is preferably 10 nm or more and 50 nm or less. When the film thickness is 10 nm or more, sufficient gas barrier property can be obtained. When the film thickness is 50 nm or less, it is possible to suppress generation of cracks caused by deformation of the thin film due to internal stress and to suppress deterioration of gas barrier property. If the film thickness exceeds 50 nm, the cost tends to increase due to an increase in the amount of material used, an increase in the film formation time, and the like, which is not preferable from the economic viewpoint. From the same viewpoint as described above, the thickness of the evaporated film made of silicon oxide is more preferably 20 nm or more and 40 nm or less.

The inorganic compound layer 5 can be formed, for example, by vacuum film formation. In the vacuum film formation, a physical vapor deposition method or a chemical vapor deposition method can be used. Examples of the physical vapor deposition method include a vacuum evaporation method, a sputtering method, an ion plating method, and the like, but are not limited thereto. Examples of the chemical vapor deposition method include a thermal chemical vapor deposition (CVD) method, a plasma CVD method, a photo CVD method, and the like, but are not limited thereto.

In the vacuum film formation, a resistance heating vacuum evaporation method, an electron beam (EB) heating vacuum evaporation deposition method, an induction heating vacuum evaporation deposition method, a sputtering method, a reactive sputtering method, a dual magnetron sputtering method, a plasma-enhanced chemical vapor deposition method (PECVD method), and the like are particularly preferably used. However, in consideration of productivity, the vacuum evaporation method is the most excellent at the present time. As a heating means of the vacuum evaporation method, it is preferable to use any one of an electron beam heating method, a resistance heating method, and an induction heating method.

### <Anchor coat layer>

As described in a second embodiment later, the laminate 10A2 may further include an anchor coat layer (not illustrated) . The anchor coat layer can be formed on the surface of the substrate layer 1 on the side on which the inorganic compound layer 5 is formed using a known anchor coat agent. Thereby, the adhesion of the inorganic compound layer 5 made of a metal oxide can be improved. Examples of the anchor coat agent include a polyester-based polyurethane resin, a polyether-based polyurethane resin, and the like. From the viewpoint of heat resistance and interlayer adhesion strength, the anchor coat agent is preferably a polyester-based polyurethane resin.

### <Coating layer>

As also described in the second embodiment later, the laminate 10A2 may further include a coating layer (not illustrated) between the inorganic compound layer 5 and the printed layer 4. The combination of the inorganic compound layer 5 and the coating layer can also function as a gas barrier layer. Hereinafter, the inorganic compound layer 5 may be referred to as a gas barrier layer, and a combination of the inorganic compound layer 5 and the coating layer may be referred to as a gas barrier layer.

The laminate 10A2 is also excellent in heat resistance. Further, since the inorganic compound layer 5 is substantially transparent, even if the inorganic compound layer 5 is provided between the substrate layer 1 and the printed layer 4, the image displayed by the printed layer 4 can be visually recognized from the surface side. The laminate 10A2 is also excellent in recyclability.

In the laminates 10A1 and 10A2, a metal vapor deposition layer may be provided between the substrate layer 1 and the sealant layer 2 in order to impart a light shielding property. When the laminate further includes an intermediate layer described later, a metal vapor deposition layer may be provided on any surface of the intermediate layer. Examples of the metal vapor deposition layer include an aluminum vapor deposition layer.

Although the sealant layer 2 may be opaque as described above, the substrate layer 1 may also be opaque. For example, the substrate layer 1 may be white. When the laminate further includes an intermediate layer described later, the intermediate layer may be opaque. For example, the intermediate layer may be white.

### <2> Second embodiment

### <2.1> Laminate

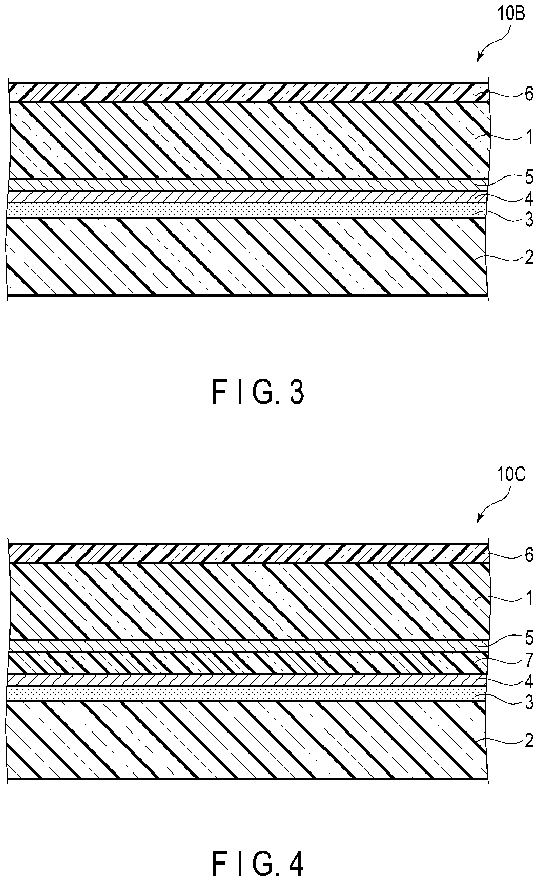

FIG. 3 is a cross-sectional view schematically illustrating a laminate according to the second embodiment of the present invention.

A laminate 10B illustrated in FIG. 3 includes a protective layer 6, a substrate layer 1, a gas barrier layer 5, a printed layer 4, an adhesive agent layer 3 and a sealant layer 2 in this order. The gas barrier layer 5 included in the laminate 10B includes an inorganic compound layer, or an inorganic compound layer and a coating layer. The laminate 10B is the same as the laminate 10A1 except that the protective layer 6 provided on the surface of the substrate layer 1 and the gas barrier layer 5 interposed between the substrate layer 1 and the printed layer 4 are further included. As the substrate layer 1, the printed layer 4, the adhesive agent layer 3, and the sealant layer 2 included in the laminate 10B, those described in the first embodiment can be used.

### <2.2> Protective layer

The laminate 10B includes the protective layer 6 as an outermost layer.

The protective layer 6 contains a thermosetting resin. The thermosetting resin is not particularly limited as long as it has heat resistance, and examples thereof include a polyurethane resin, a polyester resin, a polyamide resin, a polyamideimide resin, an acrylic resin, an epoxy resin, a water-soluble polymer, and the like. The protective layer 6 may contain one type of thermosetting resin or two or more types of thermosetting resin.

In one embodiment, the protective layer 6 preferably contains a water-soluble polymer, and is preferably an organic-inorganic composite layer further containing an organometallic compound.

Examples of the water-soluble polymer include polysaccharide such as a polyvinyl alcohol-based, a starch methylcellulose carboxymethylcellulose, and the like and a hydroxyl group-containing polymer such as an acrylic polyol-based, and the like. According to one embodiment, the protective layer 6 preferably contains a polyvinyl alcohol-based hydroxyl group-containing polymer that can be contained in the coating layer as the gas barrier layer 5 described later.

The protective layer 6 preferably contains, as the organometallic compound, at least one of a metal alkoxide, a hydrolysate of the metal alkoxide, and a reaction product of the metal alkoxide or the hydrolysate thereof. Examples of the metal alkoxide include those represented by general formula M(OR)ₙ such as tetraethoxysilane [Si(OC₂H₅)₄], triisopropoxy aluminum [Al(OC₃H₇)₃] and the like.

In addition, the protective layer 6 preferably further contains, as the organometallic compound, at least one of a silane coupling agent, a hydrolysate of the silane coupling agent, and a reaction product of the silane coupling agent or a hydrolysate of the silane coupling agent.

According to one embodiment, the protective layer 6 can be formed using a coating liquid for forming a coating layer as the gas barrier layer 5 described later. Further, in a case where the laminate 10B includes the inorganic compound layer and the coating layer as the gas barrier layer 5, the protective layer 6 may be a layer formed using the same coating liquid as the coating liquid used to form the coating layer.

The protective layer 6 reduces thermal damage at the time of heat sealing on the surface of the laminate. Since the laminate 10B includes the protective layer 6 having excellent heat resistance as the outermost layer, heat-sealing property and productivity are secured even though a polyethylene resin having poor heat resistance is used as a base material.

The thickness of the protective layer 6 is preferably in the range of 0.3 um to 3 µm. When the protective layer 6 is too thin, it tends to be difficult to achieve high heat resistance. If the protective layer 6 is too thick, it tends to be difficult to sufficiently dry the resin cured film in the process of manufacturing the laminate 10B.

### <2.3> Gas barrier layer

The gas barrier layer 5 improves, for example, oxygen barrier properties and water vapor barrier properties of the laminate 10B.

The gas barrier layer 5 includes an inorganic compound layer, or an inorganic compound layer and a coating layer. In a case where the gas barrier layer 5 includes an inorganic compound layer and a coating layer, the inorganic compound layer and the coating layer are preferably laminated in this order from the substrate layer 1 side. The gas barrier layer 5 may be formed by coating, or may be formed by vapor depositing an inorganic compound. The inorganic compound layer is the same as the inorganic compound layer described in the modification of the first embodiment.

The coating layer can be formed, for example, by coating. In this case, a coating liquid containing a resin such as polyvinyl alcohol (PVA), an ethylene-vinyl alcohol copolymer, an ethylene-vinyl acetate copolymer, polyvinylidene chloride, polyacrylonitrile, an epoxy resin, and the like can be used. Additives such as organic or inorganic particles, a layered compound, and a curing agent may be added to this coating liquid.

The coating layer may be, for example, an organic-inorganic composite layer containing at least one of a metal alkoxide, a hydrolysate of a metal alkoxide, and a reaction product of a metal alkoxide or a hydrolysate of a metal alkoxide, and a water-soluble polymer. The organic-inorganic composite layer may further contain at least one of a silane coupling agent, a hydrolysate of the silane coupling agent, and a reaction product of the silane coupling agent or the hydrolysate of the silane coupling agent.

Examples of the metal alkoxide and the hydrolysate thereof contained in the organic-inorganic composite layer include those represented by the general formula M(OR)ₙ such as tetraethoxysilane [Si (OC₂H₅)4], triisopropoxy aluminum [Al(OC₃H₇)₃], and the like, and the hydrolysate thereof. One type of these may be contained alone, or two or more types thereof may be contained in combination.

The total content of the metal alkoxide, the hydrolysate thereof, or the reaction product thereof in the coating liquid used for forming the organic-inorganic composite layer may be, for example, 40 mass% or more, 50 mass% or more, or 65 mass% or more from the viewpoint of oxygen barrier properties. Further, the total content of the metal alkoxide, the hydrolysate thereof, or the reaction product thereof in the coating solution may be, for example, 70 mass% or less.

The water-soluble polymer contained in the organic-inorganic composite layer is not particularly limited, and examples thereof include polysaccharide such as a polyvinyl alcohol-based, a starch methylcellulose carboxymethylcellulose, and the like and a hydroxyl group-containing polymer such as an acrylic polyol-based, and the like. From the viewpoint of further improving the oxygen gas barrier property, the water-soluble polymer preferably contains a polyvinyl alcohol-based water-soluble polymer. The number average molecular weight of the water-soluble polymer is, for example, from 40000 to 180000.

The polyvinyl alcohol-based water-soluble polymer contained in the organic-inorganic composite layer can be obtained, for example, by saponifying (including partial saponification) polyvinyl acetate. In this water-soluble polymer, several tens% of acetic acid groups may remain, or only several% of acetic acid groups may remain.

The content ratio of the water-soluble polymer in the coating liquid used for forming the organic-inorganic composite layer may be, for example, 15 mass% or more or 20 mass% or more from the viewpoint of oxygen barrier properties. The content ratio of the water-soluble polymer in the coating liquid may be, for example, 50 mass% or less or 45 mass% or less from the viewpoint of oxygen barrier properties.

Examples of the silane coupling agent used for the organic-inorganic composite layer include silane coupling agents having an organic functional group. Examples of the silane coupling agent include ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, γ-methacryloxypropylmethyldimethoxysilane, and the like. One of a silane coupling agent selected from these, a hydrolysate thereof, and a reaction product thereof can be used alone, or two or more thereof can be used in combination.

As the silane coupling agent, one having an epoxy group as an organic functional group is preferably used. Examples of the silane coupling agent having an epoxy group include γ-glycidoxypropyltrimethoxysilane and β- (3,4-epoxycyclohexyl) ethyltrimethoxysilane. The silane coupling agent having an epoxy group may have an organic functional group different from the epoxy group, such as a vinyl group, an amino group, a methacrylic group, or a ureyl group. One of a silane coupling agent selected from these, a hydrolysate thereof, and a reaction product thereof can be used alone, or two or more thereof can be used in combination.

The silane coupling agent having an organic functional group, a hydrolysate thereof, or a reaction product thereof can further improve the oxygen barrier properties of the coating layer and the adhesion between the coating layer and the adjacent layer by the interaction between the organic functional group and the hydroxyl group of the water-soluble polymer. In particular, in a case where the silane coupling agent, a hydrolysate thereof, or a reaction product thereof has an epoxy group, and the water-soluble polymer is polyvinyl alcohol (PVA), the oxygen barrier properties and the adhesion between adjacent layers can be further improved by the interaction between the epoxy group and the hydroxyl group of PVA.

The total content ratio of the silane coupling agent, the hydrolysate thereof, and the reaction product thereof in the coating liquid used for forming the organic-inorganic composite layer may be, for example, 1 mass% or more or 2 mass% or more from the viewpoint of oxygen barrier properties. Further, the total content of the silane coupling agent, the hydrolysate thereof, and the reaction product thereof in the coating solution may be, for example, 15 mass% or less or 12 mass% or less from the viewpoint of oxygen barrier properties.

The thickness of the coating layer is preferably 50 nm or more and 1000 nm or less, and more preferably 100 nm or more and 500 nm or less. In a case where the thickness of the gas barrier coating layer is 50 nm or more, more sufficient gas barrier property tend to be obtained, and when the thickness is 1000 nm or less, sufficient flexibility tends to be maintained.

The gas barrier layer 5 is preferably subjected to the above-mentioned surface treatment. Accordingly, adhesion between the gas barrier layer 5 and the adjacent layer can be improved.

Note that, as the material of the gas barrier layer 5, a nanocomposite may be used.

In the laminate 10B, the printed layer 4 is interposed between the gas barrier layer 5 and the adhesive agent layer 3, but the printed layer 4 may be provided at any position between the protective layer 6 and the sealant layer 2. Since the substrate layer 1 is transparent, for example, even when the printed layer 4 is included at any position between the substrate layer 1 and the sealant layer 2, the pattern displayed on the printed layer 4 can be clearly viewed when the laminate 10B is observed from the protective layer 6 side.

### <Anchor coat layer>

The laminate 10B may further include an anchor coat layer (not illustrated) on a main surface facing the gas barrier layer 5 among main surfaces of the substrate layer 1. Accordingly, adhesion of the gas barrier layer 5 can be improved. Examples of the anchor coat agent include a polyester-based polyurethane resin, a polyether-based polyurethane resin, and the like. From the viewpoint of heat resistance and interlayer adhesion strength, the anchor coat agent is preferably a polyester-based polyurethane resin.

The ratio of polyethylene in the laminate 10B is, for example, 90 mass% or more. As a result, the laminate 10B is configured as a mono-material having high recyclability.

### <2.4> Effects

Similarly to the laminate 10A1, the laminate 10B includes the substrate layer 1 containing polyethylene and having a crystallinity in the above range. Therefore, the laminate 10B is excellent in heat resistance similarly to the laminate 10A1.

The laminate 10B includes the protective layer 6 in the outermost layer. As described above, the protective layer 6 reduces thermal damage at the time of heat sealing on the surface of the laminate. Therefore, the laminate 10B can achieve further excellent heat resistance, particularly better heat-sealing suitability. Therefore, when the above-described configuration is adopted for the laminate 10B, the temperature range of heat sealing performed for bag production is widened, and it is further difficult to cause a decrease in productivity and an appearance defect due to shrinkage of the seal portion.

Further, since the gas barrier layer 5 described above, that is, the inorganic compound layer and the coating layer are substantially transparent, even if the gas barrier layer 5 is provided between the substrate layer 1 and the printed layer 4, the image displayed on the printed layer 4 can be visually recognized from the surface side.

In other words, the laminate 10B is excellent in heat resistance and recyclability.

### <3> Third embodiment

### <3.1> Laminate

FIG. 4 is a cross-sectional view schematically illustrating a laminate according to the third embodiment of the present invention.

A laminate 10C illustrated in FIG. 4 includes a protective layer 6, a substrate layer 1, an inorganic compound layer 5, a coating layer 7, a printed layer 4, an adhesive agent layer 3, and a sealant layer 2 in this order. The ratio of polyethylene in the laminate 10C is 90 mass% or more. The laminate 10C has a layer configuration similar to that of the laminate 10B according to the second embodiment described above, including an inorganic compound layer and a coating layer as the gas barrier layer 5 from the substrate layer 1 side. As the protective layer 6, the substrate layer 1, the inorganic compound layer 5, the coating layer 7, the printed layer 4, the adhesive agent layer 3, and the sealant layer 2 included in the laminate 10C, those described in the second embodiment can be used. In the laminate 10C, the inorganic compound layer 5, the coating layer 7, and the printed layer 4 can be omitted.

### <Anchor coat layer>

Similarly to the laminate 10B according to the second embodiment, the laminate 10C may further include an anchor coat layer (not illustrated) on a main surface of the substrate layer 1 facing the inorganic compound layer 5. Thereby, the adhesion of the inorganic compound layer 5 can be improved. Examples of the anchor coat agent include a polyester-based polyurethane resin, a polyether-based polyurethane resin, and the like. From the viewpoint of heat resistance and interlayer adhesion strength, the anchor coat agent is preferably a polyester-based polyurethane resin.

### <3.3> Effects

Since the laminate 10C has the same layer configuration as that of the laminate 10B, the same effect as that of the laminate 10B is obtained.

### <4> Fourth embodiment

### <4.1> Laminate

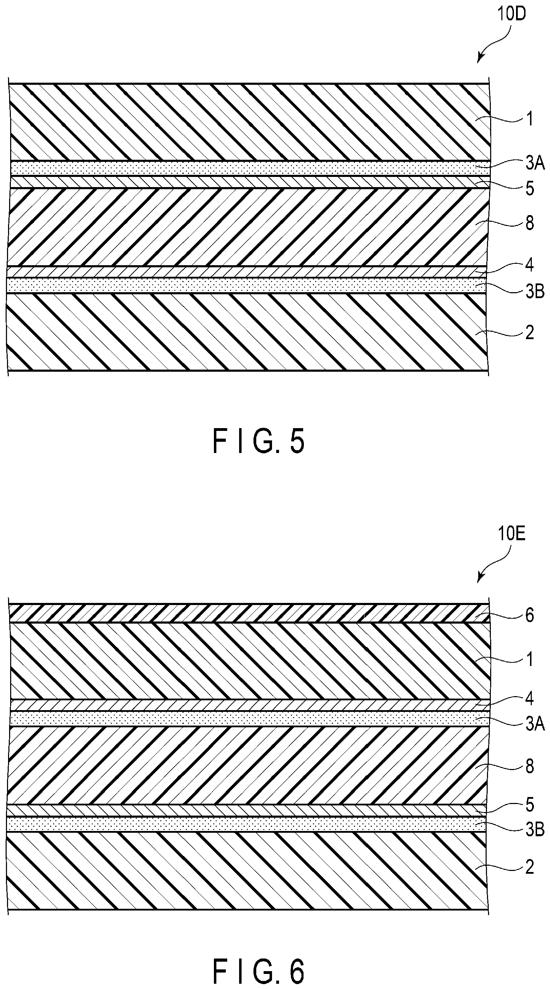

FIG. 5 is a cross-sectional view schematically illustrating a laminate according to the fourth embodiment of the present invention.

A laminate 10D illustrated in FIG. 5 includes a substrate layer 1, a first adhesive agent layer 3A, a gas barrier layer 5, an intermediate layer 8, a printed layer 4, a second adhesive agent layer 3B, and a sealant layer 2 in this order. The laminate 10D is the same as the laminate 10B except for the following matters. In other words, the laminate 10D further includes the intermediate layer 8. Further, the laminate 10D includes the first adhesive agent layer 3A and the second adhesive agent layer 3B instead of the adhesive agent layer 3. As the substrate layer 1, the printed layer 4, and the sealant layer 2 included in the laminate 10D, those described in the first embodiment can be used.

### <4.2> Gas barrier layer

The gas barrier layer 5 improves, for example, oxygen barrier properties and water vapor barrier properties of the laminate 10D. The gas barrier layer 5 is, for example, a metal layer, an inorganic oxide layer, a resin-containing layer, or a combination of two or more thereof. In a case where microwave heating by a microwave oven is assumed, the gas barrier layer 5 is preferably an inorganic oxide layer, a resin-containing layer, or a combination thereof.

The gas barrier layer 5 may be formed by coating, by melt molding, or by vapor deposition of an inorganic oxide. Alternatively, the gas barrier layer 5 may be a metal foil such as an aluminum foil, or may be formed by depositing a metal such as aluminum.

As the inorganic oxide, for example, silicon oxide, boron oxide, or metal oxides such as aluminum oxide, magnesium oxide, calcium oxide, potassium oxide, tin oxide, sodium oxide, titanium oxide, lead oxide, zirconium oxide, yttrium oxide, and the like can be used.

The resin-containing layer can be formed, for example, by coating. In this case, a coating liquid containing a resin such as polyvinyl alcohol (PVA), an ethylene-vinyl alcohol copolymer, an ethylene-vinyl acetate copolymer, polyvinylidene chloride, polyacrylonitrile, an epoxy resin, and the like can be used. Additives such as organic or inorganic particles, a layered compound, and a curing agent may be added to this coating liquid.

When the resin-containing layer is formed by melt molding, for example, an extrusion molding technique such as T-die or inflation can be used. In the melt molding, for example, the resin or a mixture of the resin and an additive is heated and melted, and a film or a sheet to be used as the gas barrier layer 5 is obtained by a T-die, inflation, or the like. Then, this film or sheet is laminated on the intermediate layer 8.

The thickness of the gas barrier layer 5 is preferably in a range of 1 nm to 200 nm, for example, in the case of an inorganic oxide layer. In a case where the thickness is 1 nm or more, excellent oxygen barrier properties and water vapor barrier properties are obtained. In a case where the thickness is 200 nm or less, the manufacturing cost can be suppressed low, cracks due to an external force such as bending or pulling hardly occur, and deterioration of the barrier property can be suppressed. In addition, for example, in a case of the resin-containing layer, it is preferably in the range of 0.1 µm to 10 µm, and more preferably in the range of 0.2 µm to 5 um. In a case where the thickness is 0.2 µm or more, excellent oxygen barrier properties and water vapor barrier properties are obtained. In a case where the thickness is 10 um or less, the manufacturing cost can be kept low.

The gas barrier layer 5 is preferably subjected to the above-mentioned surface treatment. Accordingly, adhesion between the gas barrier layer 5 and the adjacent layer can be improved.

Note that, as the material of the gas barrier layer 5, a nanocomposite may be used.

### <4.3> Intermediate layer

The intermediate layer 8 contains polyethylene. As the polyethylene, for example, those described above for the polyethylene contained in the substrate layer 1 can be used.

The polyethylene contained in the intermediate layer 8 may be the same as or different from the polyethylene contained in the substrate layer 1. In addition, the intermediate layer 8 may further contain the above-described additive.

The ratio of polyethylene in the intermediate layer 8 is preferably 50 mass% or more, and more preferably 80 mass% or more. According to one example, the intermediate layer 8 is made of polyethylene. According to another example, the intermediate layer 8 contains polyethylene and additives.

The intermediate layer 8 has a crystallinity of 35% or more. The intermediate layer 8 preferably has a crystallinity of 40% or more, and more preferably has a crystallinity of 50% or more. The crystallinity of the intermediate layer 8 is in a range of 50% to 75% according to an example.

The intermediate layer 8 having a crystallinity of 35% or more enhances the strength of the laminate 10D, particularly the puncture resistance. Therefore, the laminate 10D is excellent in strength, particularly puncture resistance. A laminate having a high ratio of polyethylene has weaker stiffness than other laminates, and therefore is often folded when used as a packaging material. When the number of times of bending increases, the possibility that pinholes are generated increases, but the laminate 10D having excellent puncture resistance hardly generates pinholes. From this viewpoint, the intermediate layer 8 having a crystallinity of 35% or more is preferably a stretched film, and both the substrate layer 1 and the intermediate layer 8 are more preferably stretched films. In this case, the stretched film constituting the intermediate layer 8 may be the same as or different from the stretched film constituting the substrate layer 1.

The melting point of the intermediate layer 8 is preferably in the range of 100°C to 140°C, and more preferably in the range of 120°C to 140°C.

The thickness of the intermediate layer 8 is preferably in a range of 10 um to 200 µm, and more preferably in a range of 15 um to 50 µm.

The intermediate layer 8 may be colored, for example, may be white.

The intermediate layer 8 can be manufactured by a known method such as a casting method or an inflation method. It is also possible to use, as the intermediate layer 8, a polyethylene film having a multilayer structure obtained by extruding polyethylene having different densities by a co-extrusion method. The stretched film is obtained, for example, by stretching a film obtained by forming a film of polyethylene by a T-die method, an inflation method, or the like.

According to this embodiment, an intermediate layer having a crystallinity of less than 35% may be used. By using the intermediate layer having a crystallinity of less than 35%, the strength of the laminate 10D, particularly the drop resistance can be improved. The intermediate layer having a crystallinity of less than 35% is preferably an unstretched film.

### <4.4> Adhesive agent layer

The adhesives for forming the first adhesive agent layer 3A and the second adhesive agent layer 3B may be the same or different. The adhesive for forming the first adhesive agent layer 3A and the second adhesive agent layer 3B contains at least one adhesive.

The adhesive may be a one-component curable adhesive, a two-component curable adhesive, or a non-curable adhesive. The adhesive may be a solventless type adhesive or a solvent type adhesive.

Examples of the adhesive include polyether-based adhesives, polyester-based adhesives, silicone-based adhesives, epoxy-based adhesives such as polyamine-based adhesives, urethane-based adhesives, rubber-based adhesives, vinyl-based adhesives, silicone-based adhesives, epoxy-based adhesives, phenol-based adhesives, and olefin-based adhesives. An adhesive containing a biomass component can also be preferably used. The adhesive is preferably a polyamine-based adhesive having gas barrier property or a urethane-based adhesive.

The first adhesive agent layer 3A and the second adhesive agent layer 3B may be a cured product of a resin composition containing a polyester polyol, an isocyanate compound, and a phosphoric acid-modified compound. Such the first adhesive agent layer 3A and the second adhesive agent layer 3B are excellent in oxygen barrier properties and water vapor barrier properties of the laminate 10D.

The thickness of each of the first adhesive agent layer 3A and the second adhesive agent layer 3B is preferably in a range of 0.1 µm to 20 µm, more preferably in a range of 0.5 um to 10 µm, and still more preferably in a range of 1µm to 5 µm.

The first adhesive agent layer 3A and the second adhesive agent layer 3B can be formed by applying and drying the adhesive agent onto the target layer such as the substrate layer 1 by a conventionally known method such as a direct gravure roll coating method, a gravure roll coating method, a kiss coating method, a reverse roll coating method, a fountain method, a transfer roll coating method, and the like.

Note that, in FIG. 5, the laminate 10D includes the gas barrier layer 5 between the first adhesive agent layer 3A and the intermediate layer 8, but the laminate 10D may include the gas barrier layer 5 between the intermediate layer 8 and the second adhesive agent layer 3B.

Further, in FIG. 5, the printed layer 4 is provided between the intermediate layer 8 and the second adhesive agent layer 3B, but the printed layer 4 may be provided at any position between the substrate layer 1 and the sealant layer 2. The printed layer 4 is preferably provided between the first adhesive agent layer 3A and the substrate layer 1. In this case, when the laminate 10B is observed from the substrate layer 1 side, the pattern displayed on the printed layer 4 is easily clearly seen.

Further, the anchor coat layer may be formed on a surface of the main surface of the substrate layer 1 facing the first adhesive agent layer 3A. The gas barrier layer 5 and the printed layer 4 may be omitted.

The ratio of polyethylene in the laminate 10D is, for example, 90 mass% or more. As a result, the laminate 10D is configured as a mono-material having high recyclability.

### <4.5> Effects

Similarly to the laminate 10A1, the laminate 10D described above includes the substrate layer 1 containing polyethylene and having a crystallinity in the above range. Therefore, the laminate 10D is excellent in heat resistance similarly to the laminate 10A1.

Further, in addition, the laminate 10D includes the intermediate layer 8 having a crystallinity within the above range. The intermediate layer 8 increases the strength of the laminate 10D, particularly the puncture resistance. Therefore, the laminate 10D is excellent in strength, particularly puncture resistance.

Then, in the laminate 10D, since all of the substrate layer 1, the intermediate layer 8 and the sealant layer 2 contain polyethylene, this laminate is excellent in recyclability.

Further, as described above, a laminate having a high ratio of polyethylene has weaker stiffness than other laminates, and therefore is often folded when used as a packaging material. When the number of times of bending increases, the possibility that pinholes are generated increases, but the laminate 10D having excellent puncture resistance hardly generates pinholes.

Here, the "puncture resistance" of the laminate 10D is a value obtained by pricking the laminate 10D from the substrate layer 1 side in a method prescribed in JIS Z1707: 2019 "General Rules for Plastic Films for Food Packaging". Specifically, a needle having a diameter of 1 mm and a semicircular tip is pricked into the laminate 10D at a speed of 50 mm/min from the substrate layer 1 side, and the maximum force until the needle penetrates is measured. This measurement is performed multiple times, and the arithmetic average of the maximum forces is obtained as the puncture resistance.

### <5> Fifth embodiment

### <5.1> Laminate

FIG. 6 is a cross-sectional view schematically illustrating a laminate according to a fifth embodiment of the present invention.

A laminate 10E illustrated in FIG. 6 includes a protective layer 6, a substrate layer 1, a printed layer 4, a first adhesive agent layer 3A, an intermediate layer 8, a gas barrier layer 5, a second adhesive agent layer 3B, and a sealant layer 2 in this order. The laminate 10E is the same as the laminate 10D except for the following matters. That is, the laminate 10E further includes the protective layer 6. In the laminate 10E, the inorganic compound layer 5 is interposed between the second adhesive agent layer 3B and the intermediate layer 8. In the laminate 10E, the printed layer 4 is interposed between the substrate layer 1 and the first adhesive agent layer 3A. As the substrate layer 1, the printed layer 4, the first adhesive agent layer 3A, the intermediate layer 8, the second adhesive agent layer 3B, and the sealant layer 2 included in the laminate 10E, those described in the fourth embodiment can be used.

### <5.2> Protective layer

The protective layer 6 contains a thermosetting resin. The thermosetting resin is not particularly limited as long as it has heat resistance, and examples thereof include a polyurethane resin, a polyester resin, a polyamide resin, a polyamideimide resin, an acrylic resin, an epoxy resin, a water-soluble polymer, and the like. The protective layer 6 may contain one type of thermosetting resin or two or more types of thermosetting resin.

According to one embodiment, the protective layer 6 is preferably an organic-inorganic composite layer containing a water-soluble polymer and an organometallic compound.

Examples of the water-soluble polymer include polysaccharide such as a polyvinyl alcohol-based, a starch methylcellulose carboxymethylcellulose, and the like and a hydroxyl group-containing polymer such as an acrylic polyol-based, and the like. According to one embodiment, the protective layer 6 preferably contains a polyvinyl alcohol-based hydroxyl group-containing polymer that can be contained in the coating layer as the gas barrier layer 5 described later.

The protective layer 6 preferably contains, as the organometallic compound, at least one of a metal alkoxide, a hydrolysate of the metal alkoxide, and a reaction product of the metal alkoxide or the hydrolysate thereof. Examples of the metal alkoxide include those represented by general formula M(OR)ₙ such as tetraethoxysilane [Si (OC₂H₅)₄], triisopropoxy aluminum [Al(OC₃H₇)₃] and the like.

In addition, the protective layer 6 preferably further contains, as the organometallic compound, at least one of a silane coupling agent, a hydrolysate of the silane coupling agent, and a reaction product of the silane coupling agent or a hydrolysate of the silane coupling agent.

According to one embodiment, the protective layer 6 can be formed using a coating liquid for forming a coating layer as the gas barrier layer 5 described later. Further, in a case where the laminate 10E includes the inorganic compound layer and the coating layer as the gas barrier layer 5, the protective layer 6 may be a layer formed using the same coating liquid as the coating liquid used to form the coating layer.

Since the laminate 10E includes the protective layer 6 having excellent heat resistance as the outermost layer, heat-sealing property and productivity are secured even though a polyethylene resin having poor heat resistance is used as a base material.

The thickness of the protective layer 6 is preferably in the range of 0.3 um to 3 um. When the protective layer 6 is too thin, it tends to be difficult to achieve high heat resistance. If the protective layer 6 is too thick, it tends to be difficult to sufficiently dry the resin cured film in the process of manufacturing the laminate 10E.

### <5.3> Gas barrier layer

The gas barrier layer 5 improves, for example, oxygen barrier properties and water vapor barrier properties of the laminate 10E.

The gas barrier layer 5 includes an inorganic compound layer, or an inorganic compound layer and a coating layer. In a case where the gas barrier layer 5 includes an inorganic compound layer and a coating layer, the inorganic compound layer and the coating layer are preferably laminated in this order from the intermediate layer 8 side.

The gas barrier layer 5 may be formed by coating, or may be formed by vapor depositing an inorganic compound.

Examples of the inorganic compound contained in the inorganic compound layer include metal oxides such as aluminum oxide, silicon oxide, magnesium oxide, tin oxide, and the like. The inorganic compound layer is preferably an evaporated film made of, for example, a metal oxide. From the viewpoint of transparency and barrier properties, the metal oxide may be selected from the group consisting of aluminum oxide, silicon oxide, and magnesium oxide. Furthermore, considering the cost, the metal oxide is selected from aluminum oxide, silicon oxide. Furthermore, silicon oxide is more preferably used as the metal oxide from the viewpoint of excellent tensile stretchability during processing. By forming the inorganic compound layer included in gas barrier layer 5 as an evaporated film made of a metal oxide, high barrier properties can be obtained with a very thin layer in a range not affecting the recyclability of laminate 10E.

Since the evaporated film made of a metal oxide has transparency, there is an advantage that a user who holds a packaging material made of the laminate is less likely to erroneously recognize that a metal foil is used as compared with an evaporated film made of a metal.

The thickness of the evaporated film made of aluminum oxide is preferably 5 nm or more and 30 nm or less. When the film thickness is 5 nm or more, sufficient gas barrier property can be obtained. When the film thickness is 30 nm or less, it is possible to suppress generation of cracks caused by deformation of the thin film due to internal stress and to suppress deterioration of gas barrier property. If the film thickness exceeds 30 nm, the cost tends to increase due to an increase in the amount of material used, an increase in the film formation time, and the like, which is not preferable from the economic viewpoint. From the same viewpoint as described above, the thickness of the evaporated film made of aluminum oxide is more preferably 7 nm or more and 15 nm or less.

The film thickness of the evaporated film made of silicon oxide is preferably 10 nm or more and 50 nm or less. When the film thickness is 10 nm or more, sufficient gas barrier property can be obtained. When the film thickness is 50 nm or less, it is possible to suppress generation of cracks caused by deformation of the thin film due to internal stress and to suppress deterioration of gas barrier property. If the film thickness exceeds 50 nm, the cost tends to increase due to an increase in the amount of material used, an increase in the film formation time, and the like, which is not preferable from the economic viewpoint. From the same viewpoint as described above, the thickness of the evaporated film made of silicon oxide is more preferably 20 nm or more and 40 nm or less.

The inorganic compound layer can be formed, for example, by vacuum film formation. In the vacuum film formation, a physical vapor deposition method or a chemical vapor deposition method can be used. Examples of the physical vapor deposition method include a vacuum evaporation method, a sputtering method, an ion plating method, and the like, but are not limited thereto. Examples of the chemical vapor deposition method include a thermal chemical vapor deposition (CVD) method, a plasma CVD method, a photo CVD method, and the like, but are not limited thereto.

In the vacuum film formation, a resistance heating vacuum evaporation method, an electron beam (EB) heating vacuum evaporation deposition method, an induction heating vacuum evaporation deposition method, a sputtering method, a reactive sputtering method, a dual magnetron sputtering method, a plasma-enhanced chemical vapor deposition method (PECVD method), and the like are particularly preferably used. However, in consideration of productivity, the vacuum evaporation method is the most excellent at the present time. As a heating means of the vacuum evaporation method, it is preferable to use any one of an electron beam heating method, a resistance heating method, and an induction heating method.

The coating layer can be formed, for example, by coating. In this case, a coating liquid containing a resin such as polyvinyl alcohol (PVA), an ethylene-vinyl alcohol copolymer, an ethylene-vinyl acetate copolymer, polyvinylidene chloride, polyacrylonitrile, an epoxy resin, and the like can be used. Additives such as organic or inorganic particles, a layered compound, and a curing agent may be added to this coating liquid.

The coating layer may be, for example, an organic-inorganic composite layer containing at least one of a metal alkoxide, a hydrolysate of a metal alkoxide, and a reaction product of a metal alkoxide or a hydrolysate of a metal alkoxide, and a water-soluble polymer. The organic-inorganic composite layer may further contain at least one of a silane coupling agent, a hydrolysate of the silane coupling agent, and a reaction product of the silane coupling agent or the hydrolysate of the silane coupling agent.

Examples of the metal alkoxide and the hydrolysate thereof contained in the organic-inorganic composite layer include those represented by the general formula M(OR)ₙ such as tetraethoxysilane [Si (OC₂H₅)₄], triisopropoxy aluminum [Al(OC₃H₇)₃], and the like, and the hydrolysate thereof. One type of these may be contained alone, or two or more types thereof may be contained in combination.

The total content of the metal alkoxide, the hydrolysate thereof, or the reaction product thereof in the coating liquid used for forming the organic-inorganic composite layer may be, for example, 40 mass% or more, 50 mass% or more, or 65 mass% or more from the viewpoint of oxygen barrier properties. Further, the total content of the metal alkoxide, the hydrolysate thereof, or the reaction product thereof in the coating solution may be, for example, 70 mass% or less.

The water-soluble polymer contained in the organic-inorganic composite layer is not particularly limited, and examples thereof include polysaccharide such as a polyvinyl alcohol-based, a starch methylcellulose carboxymethylcellulose, and the like and a hydroxyl group-containing polymer such as an acrylic polyol-based, and the like. From the viewpoint of further improving the oxygen gas barrier property, the water-soluble polymer preferably contains a polyvinyl alcohol-based water-soluble polymer. The number average molecular weight of the water-soluble polymer is, for example, from 40000 to 180000.

The polyvinyl alcohol-based water-soluble polymer contained in the organic-inorganic composite layer can be obtained, for example, by saponifying (including partial saponification) polyvinyl acetate. In this water-soluble polymer, several tens% of acetic acid groups may remain, or only several% of acetic acid groups may remain.

The content ratio of the water-soluble polymer in the coating liquid used for forming the organic-inorganic composite layer may be, for example, 15 mass% or more or 20 mass% or more from the viewpoint of oxygen barrier properties. The content ratio of the water-soluble polymer in the coating liquid may be, for example, 50 mass% or less or 45 mass% or less from the viewpoint of oxygen barrier properties.

Examples of the silane coupling agent used for the organic-inorganic composite layer include silane coupling agents having an organic functional group. Examples of the silane coupling agent include ethyltrimethoxysilane, vinyltrimethoxysilane, γ-chloropropylmethyldimethoxysilane, γ-chloropropyltrimethoxysilane, glycidoxypropyltrimethoxysilane, γ-methacryloxypropyltrimethoxysilane, γ-methacryloxypropylmethyldimethoxysilane, and the like. One of a silane coupling agent selected from these, a hydrolysate thereof, and a reaction product thereof can be used alone, or two or more thereof can be used in combination.

As the silane coupling agent, one having an epoxy group as an organic functional group is preferably used. Examples of the silane coupling agent having an epoxy group include γ-glycidoxypropyltrimethoxysilane and β- (3,4-epoxycyclohexyl) ethyltrimethoxysilane. The silane coupling agent having an epoxy group may have an organic functional group different from the epoxy group, such as a vinyl group, an amino group, a methacrylic group, or a ureyl group. One of a silane coupling agent selected from these, a hydrolysate thereof, and a reaction product thereof can be used alone, or two or more thereof can be used in combination.

The silane coupling agent having an organic functional group, a hydrolysate thereof, or a reaction product thereof can further improve the oxygen barrier properties of the organic-inorganic composite layer and the adhesion between the coating layer and the adjacent layer by the interaction between the organic functional group and the hydroxyl group of the water-soluble polymer. In particular, in a case where the silane coupling agent, a hydrolysate thereof, or a reaction product thereof has an epoxy group, and the water-soluble polymer is polyvinyl alcohol (PVA), the oxygen barrier properties and the adhesion between adjacent layers can be further improved by the interaction between the epoxy group and the hydroxyl group of PVA.

The total content ratio of the silane coupling agent, the hydrolysate thereof, and the reaction product thereof in the coating liquid used for forming the organic-inorganic composite layer may be, for example, 1 mass% or more, or 2 mass% or more from the viewpoint of oxygen barrier properties. Further, the total content of the silane coupling agent, the hydrolysate thereof, and the reaction product thereof in the coating solution may be, for example, 15 mass% or less, or 12 mass% or less from the viewpoint of oxygen barrier properties.

The gas barrier layer 5 is preferably subjected to the above-mentioned surface treatment. Accordingly, adhesion between the gas barrier layer 5 and the adjacent layer can be improved.

Note that, as the material of the gas barrier layer 5, a nanocomposite may be used.

The thickness of the coating layer is preferably 50 nm or more and 1000 nm or less, and more preferably 100 nm or more and 500 nm or less. In a case where the thickness of the gas barrier coating layer is 50 nm or more, more sufficient gas barrier property tend to be obtained, and when the thickness is 1000 nm or less, sufficient flexibility tends to be maintained.

### <Anchor coat layer>

The laminate 10E may further include an anchor coat layer (not illustrated) on the surface of the intermediate layer 8 on the side where the gas barrier layer 5 is formed. Alternatively, the laminate 10E may further include an anchor coat layer (not illustrated) on a surface of the main surface of the substrate layer 1 facing the first adhesive agent layer 3A. The anchor coat layer can be formed using a known anchor coat agent. Thereby, the adhesion of the inorganic compound layer made of a metal oxide can be improved. Examples of the anchor coat agent include a polyester-based polyurethane resin, a polyether-based polyurethane resin, and the like. From the viewpoint of heat resistance and interlayer adhesion strength, the anchor coat agent is preferably a polyester-based polyurethane resin.

Although the laminate 10E illustrated in FIG. 6 includes the printed layer 4 between the substrate layer 1 and the first adhesive agent layer 3A, the printed layer 4 may be included at any position between the protective layer 6 and the sealant layer 2. Since the substrate layer 1 and the intermediate layer 8 included in the laminate 10E are transparent, the pattern displayed on the printed layer 4 can be clearly viewed when the laminate 10E is observed from the protective layer 6 side even if the printed layer 4 is included at any position. According to one example, it is preferable that the printed layer 4 is included between the intermediate layer 8 and the protective layer 6 so that the pattern displayed on the printed layer 4 can be more clearly seen.

In FIG. 6, the laminate 10E includes the gas barrier layer 5 on the surface of the intermediate layer 8 facing the sealant layer 2, but the laminate 10E may include the gas barrier layer 5 on the surface of the intermediate layer 8 facing the substrate layer 1.

The ratio of polyethylene in the laminate 10E is, for example, 90 mass% or more. As a result, the laminate 10E is configured as a mono-material having high recyclability.

### <5.4> Effects

Similarly to the laminate 10A1, the laminate 10E described above includes, as the substrate layer 1, a polyethylene-containing layer having a crystallinity in the above range. Therefore, the laminate 10E is excellent in heat resistance similarly to the laminate 10A1.

Further, the laminate 10E includes the protective layer 6. As described above, the protective layer 6 reduces thermal damage at the time of heat sealing on the surface of the laminate. Therefore, the laminate 10E can achieve further excellent heat resistance, particularly better heat-sealing suitability. Therefore, when the above-described configuration is adopted for the laminate 10E, the temperature range of the heat sealing performed for bag production is widened, and the deterioration in productivity is further less likely to occur.

Further, in addition, the laminate 10E includes the intermediate layer 8 having a crystallinity within the above range. The intermediate layer 8 increases the strength of the laminate 10E, particularly the puncture resistance. Therefore, the laminate 10E is excellent in strength, particularly puncture resistance.

Then, in the laminate 10E, since all of the substrate layer 1, the intermediate layer 8 and the sealant layer 2 contain polyethylene, this laminate is excellent in recyclability.

Further, a laminate having a high ratio of polyethylene has weaker stiffness than other laminates, and therefore is often folded when used as a packaging material. When the number of times of bending increases, the possibility that pinholes are generated increases, but the laminate 10E having excellent puncture resistance hardly generates pinholes.

Since the substrate layer 1 and the intermediate layer 8 are transparent in the laminate 10E, for example, even when the printed layer 4 is included at any position between the substrate layer 1 and the sealant layer 2, the pattern displayed on the printed layer 4 is clearly viewed when the printed layer 4 is observed from the protective layer 6 side. In addition, in the packaged article including the laminate 10E described above, the visibility of the contents is high.

### <6> Sixth embodiment

### <6.1> Laminate

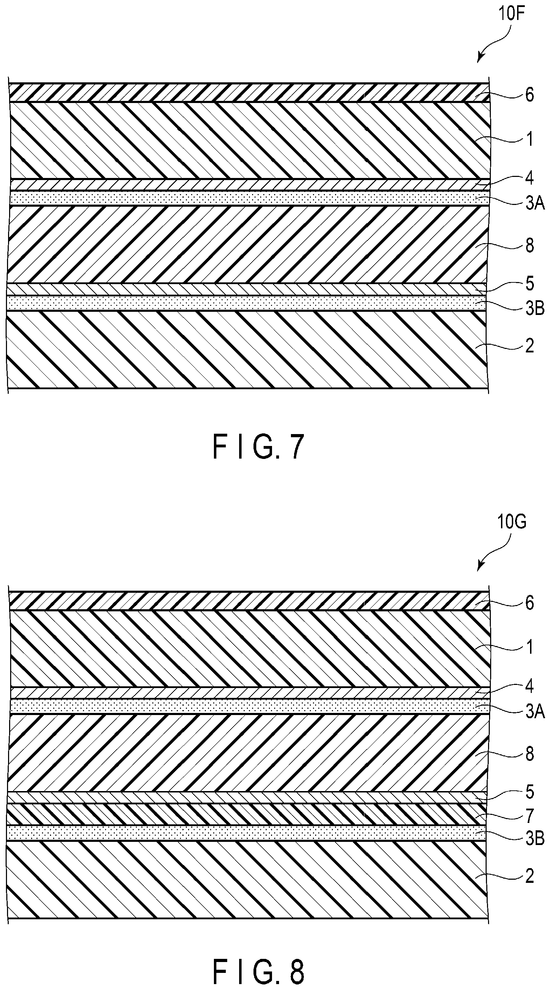

FIG. 7 is a cross-sectional view schematically illustrating a laminate according to a sixth embodiment of the present invention.

A laminate 10F illustrated in FIG. 7 includes a protective layer 6, a substrate layer 1, a printed layer 4, a first adhesive agent layer 3A, an intermediate layer 8, a gas barrier layer 5, a second adhesive agent layer 3B, and a sealant layer 2 in this order. The laminate 10F is the same as the laminate 10E except that the crystallinity of the intermediate layer 8 is less than 35%. Among the layers included in the laminate 10F, the layers described in the fifth embodiment can be used as the layers other than the intermediate layer 8, that is, the protective layer 6, the substrate layer 1, the printed layer 4, the first adhesive agent layer 3A, the gas barrier layer 5, the second adhesive agent layer 3B, and the sealant layer 2.

### <6.2> Intermediate layer

The intermediate layer 8 contains polyethylene. As the polyethylene, for example, those described above for the polyethylene contained in the substrate layer 1 can be used. The intermediate layer 8 is, for example, high-density polyethylene (HDPE), medium-density polyethylene (MDPE), low-density polyethylene (LDPE), linear low-density polyethylene (LLDPE), or very-low-density polyethylene (VLDPE) .

The polyethylene contained in the intermediate layer 8 may be the same as or different from the polyethylene contained in the substrate layer 1. In addition, the intermediate layer 8 may further contain the above-described additive.

The ratio of polyethylene in the intermediate layer 8 is preferably 50 mass% or more, and more preferably 80 mass% or more. According to one example, the intermediate layer 8 is made of polyethylene. According to another example, the intermediate layer 8 contains polyethylene and additives.

The crystallinity of the intermediate layer 8 is less than 35%. The crystallinity of the intermediate layer 8 is preferably 30% or less. The crystallinity of the intermediate layer 8 is preferably 150 or more.

The intermediate layer 8 having a crystallinity of less than 35% can increase the strength of the laminate 10F, particularly the drop resistance. Such intermediate layer 8 is preferably an unstretched film. From the viewpoint of drop resistance, it is preferable that the intermediate layer 8 is an unstretched film having a crystallinity of less than 35%, and the substrate layer 1 is a stretched film having a crystallinity of 35% or more.

Note that, according to this embodiment, an intermediate layer having a crystallinity of 35% or more may be used. In a case where the intermediate layer having a crystallinity of 35% or more is used, the strength of the laminate 10, particularly the puncture resistance can be improved. The intermediate layer having a crystallinity of 35% or more is preferably a stretched film.

The thickness of the intermediate layer 8 is preferably in a range of 10 µm to 200 µm, and more preferably in a range of 15 µm to 50 µm.

The intermediate layer 8 can be produced by a known method such as the casting method or the inflation method described above. And a polyethylene film having a multilayer structure obtained by extruding polyethylene having different densities by a co-extrusion method can also be used as the intermediate layer 8.

### <Anchor coat layer>

The laminate 10F may further include an anchor coat layer (not illustrated) on the surface of the intermediate layer 8 on the side where the gas barrier layer 5 is formed. Alternatively, the laminate 10F may further include an anchor coat layer (not illustrated) on a surface of the main surface of the substrate layer 1 facing the first adhesive agent layer 3A. As the anchor coat layer, those described in the fifth embodiment can be used.

Note that, in FIG. 7, the laminate 10F includes the gas barrier layer 5 between the intermediate layer 8 and the second adhesive agent layer 3B, but the laminate 10F may include the gas barrier layer 5 between the first adhesive agent layer 3A and the intermediate layer 8.

Further, in FIG. 7, the printed layer 4 is provided between the substrate layer 1 and the first adhesive agent layer 3A. The printed layer 4 is preferably provided between the protective layer 6 and the first adhesive agent layer 3A. In this case, when the laminate 10F is observed from the protective layer 6 side, the pattern displayed on the printed layer 4 is easily seen clearly.

In the laminate 10F, the printed layer 4 and the gas barrier layer 5 may be omitted.

The ratio of polyethylene in the laminate 10F is, for example, 90 mass% or more. As a result, the laminate 10F is configured as a mono-material having high recyclability.

### <6.3> Effects

In the laminate 10F described above, the crystallinity of the substrate layer 1 is within the above range. Therefore, the laminate 10F is excellent in heat resistance similarly to the laminate 10A1.

Further, the laminate 10F includes the protective layer 6. As described above, the protective layer 6 reduces thermal damage at the time of heat sealing on the surface of the laminate. Therefore, the laminate 10F can achieve further excellent heat resistance, particularly better heat-sealing suitability. Therefore, when the above-described configuration is adopted for the laminate 10F, the temperature range of the heat sealing performed for bag production is widened, and the deterioration in productivity is further less likely to occur.

Further, in addition, the laminate 10F includes the intermediate layer 8 having a crystallinity in the above range. The intermediate layer 8 increases the strength of the laminate 10F, particularly the drop resistance. In other words, in the laminate 10F, when used in a package, the intermediate layer 8 located inside the substrate layer 1 is softer than the substrate layer 1. This structure is suitable for absorbing an impact generated when a packaged article using the laminate 10F as a packaging material is dropped. Therefore, a packaged article using the laminate 10F as a packaging material is less likely to be damaged (bag breakage) due to dropping. Therefore, the laminate 10F is excellent in strength, particularly drop resistance.

In the laminate 10F, since all of the substrate layer 1, the intermediate layer 8 and the sealant layer 2 contain polyethylene, the recyclability is excellent.

### <7> Seventh embodiment

### <7.1> Laminate

FIG. 8 is a cross-sectional view schematically illustrating a laminate according to a seventh embodiment of the present invention.

A laminate 10G illustrated in FIG. 8 includes a protective layer 6, a substrate layer 1, a printed layer 4, a first adhesive agent layer 3A, an intermediate layer 8, an inorganic compound layer 5, a coating layer 7, a second adhesive agent layer 3B, and a sealant layer 2 in this order. The ratio of polyethylene in the laminate 10G is 90 mass% or more. The laminate 10G is the same as that in the case where the gas barrier layer 5 included in the laminate 10E according to the fifth embodiment is formed of an inorganic compound layer and a coating layer. As the protective layer 6, the substrate layer 1, the printed layer 4, the first adhesive agent layer 3A, the intermediate layer 8, the inorganic compound layer 5, the coating layer 7, the second adhesive agent layer 3B, and the sealant layer 2 included in the laminate 10G, those described in the fifth embodiment can be used.

### <7.2> Effects

Similarly to the laminate 10A1, the laminate 10G includes, as the substrate layer 1, a polyethylene-containing layer having a crystallinity in the above range. Therefore, the laminate 10G is excellent in heat resistance similarly to the laminate 10A1.

Further, the laminate 10G includes the protective layer 6. As described above, the protective layer 6 reduces thermal damage at the time of heat sealing on the surface of the laminate. Therefore, the laminate 10G can achieve further excellent heat resistance, particularly better heat-sealing suitability. Therefore, when the above-described configuration is adopted for the laminate 10G, the temperature range of the heat sealing performed for bag production is widened, and the deterioration in productivity is further less likely to occur.

In addition, the laminate 10G includes the intermediate layer 8 having a crystallinity within the above range. The intermediate layer 8 increases the strength of the laminate 10G, particularly the puncture resistance. Therefore, the laminate 10G is excellent in strength, particularly puncture resistance.

In the laminate 10G, each of the substrate layer 1, the intermediate layer 8 and the sealant layer 2 contains polyethylene, and the ratio of polyethylene is 90 mass% or more. This laminate is excellent in recyclability.

Further, a laminate having a high ratio of polyethylene has weaker stiffness than other laminates, and therefore is often folded when used as a packaging material. When the number of times of bending increases, the possibility that pinholes are generated increases, but the laminate 10G having excellent puncture resistance hardly generates pinholes.

Since the substrate layer 1 and the intermediate layer 8 are transparent in the laminate 10G, for example, even when the printed layer 4 is included at any position between the substrate layer 1 and the sealant layer 2, the pattern displayed on the printed layer 4 is clearly viewed when the printed layer 4 is observed from the protective layer 6 side. In addition, in the packaged article including the laminate 10G described above, the visibility of the contents is high.

### <8> Eighth embodiment

### <8.1> Laminate

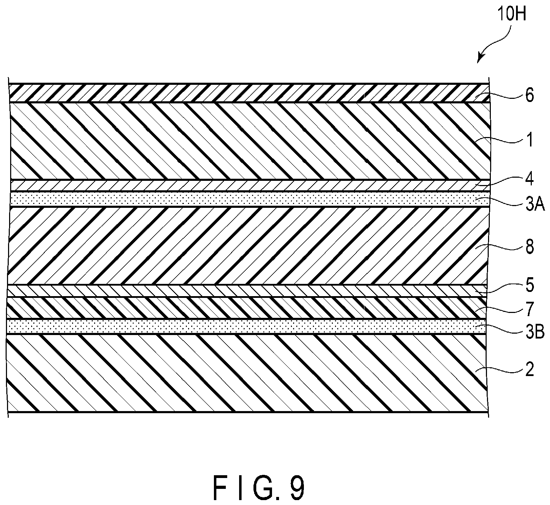

FIG. 9 is a cross-sectional view schematically illustrating a laminate according to an eighth embodiment of the present invention.

A laminate 10H illustrated in FIG. 9 includes a protective layer 6, a substrate layer 1, a printed layer 4, a first adhesive agent layer 3A, an intermediate layer 8, an inorganic compound layer 5, a coating layer 7, a second adhesive agent layer 3B, and a sealant layer 2 in this order. The ratio of polyethylene in the laminate 10H is 90 mass% or more. The laminate 10H is the same as that in the case where the gas barrier layer 5 included in the laminate 10F according to the sixth embodiment is formed of an inorganic compound layer and a coating layer. As the protective layer 6, the substrate layer 1, the printed layer 4, the first adhesive agent layer 3A, the intermediate layer 8, the inorganic compound layer 5, the coating layer 7, the second adhesive agent layer 3B, and the sealant layer 2 included in the laminate 10H, those described in the sixth embodiment can be used.

### <8.2> Effects

In the laminate 10H, the crystallinity of the substrate layer 1 is within the above range. Therefore, the laminate 10H is excellent in heat resistance similarly to the laminate 10A1.

Further, the laminate 10H includes the protective layer 6. As described above, the protective layer 6 reduces thermal damage at the time of heat sealing on the surface of the laminate. Therefore, the laminate 10H can achieve further excellent heat resistance, particularly better heat-sealing suitability. Therefore, when the above-described configuration is adopted for the laminate 10H, the temperature range of the heat sealing performed for bag production is widened, and the deterioration in productivity is further less likely to occur.

Further, in addition, the laminate 10H includes the intermediate layer 8 having a crystallinity in the above range. The intermediate layer 8 increases the strength of the laminate 10H, particularly the drop resistance. In other words, in the laminate 10H, when used in a package, the intermediate layer 8 located inside the substrate layer 1 is softer than the substrate layer 1. This structure is suitable for absorbing an impact generated when a packaged article using the laminate 10H as a packaging material is dropped. Therefore, a packaged article using the laminate 10H as a packaging material is less likely to be damaged (bag breakage) due to dropping. Therefore, the laminate 10H is excellent in strength, particularly drop resistance.

Then, the ratio of polyethylene in the laminate 10H is 90 mass% or more. Therefore, the laminate 10H is also excellent in recyclability.

The printed layer 4 may be provided on the front surface of the substrate layer 1, on the front surface of the intermediate layer 8, or on the back surface of the intermediate layer 8. In any of the above cases, an image such as a pattern or text displayed on the printed layer 4 can be visually recognized with good visibility. Note that the printed layer 4 may be omitted.

### <9> Ninth embodiment

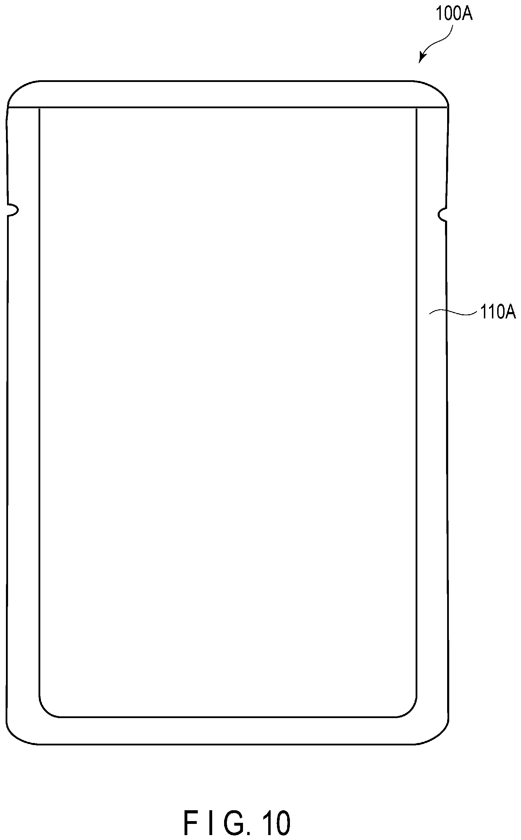

FIG. 10 is a view schematically illustrating a packaged article according to a ninth embodiment of the present invention.

A packaged article 100A illustrated in FIG. 10 includes a package 110A and contents contained therein.

The package 110A is a flat pouch. The package 110A includes a pair of main body films. Each of the main body films is any one of the laminates described in the first to eighth embodiments, or is cut out from the laminate. The main body films are stacked such that the sealant layers face each other, and peripheral edges thereof are heat-sealed to each other. In the package 110A, a notch is provided as an easily openable structure in the heat-sealed portion.

The content may be any of a liquid, a solid, and a mixture thereof. The content is, for example, a food or a drug.

### <10> Tenth embodiment

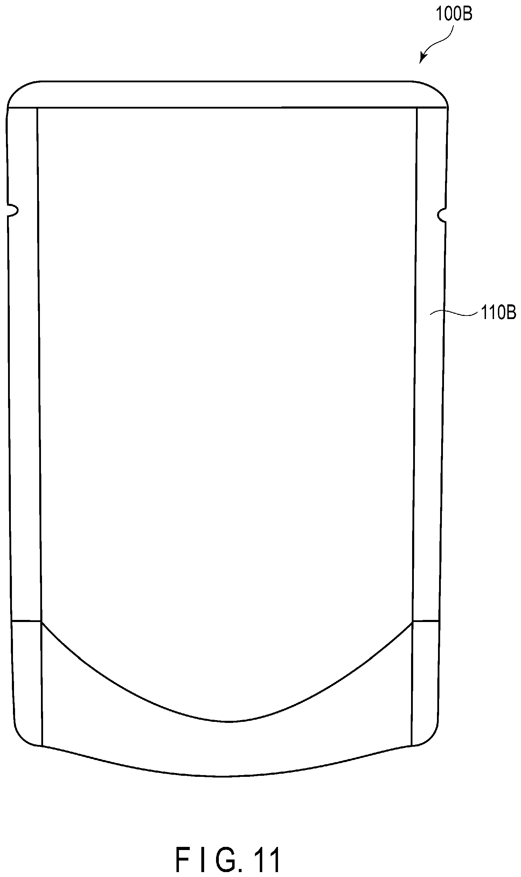

FIG. 11 is a view schematically illustrating a packaged article according to a tenth embodiment of the present invention.

A packaged article 100B illustrated in FIG. 11 includes a package 110B and contents contained therein. The contents are, for example, the same as those described for the packaged article 100A.

The package 110B is a standing pouch. The package 110B includes a pair of main body films and a bottom film. Each of these films is any one of the laminates described in the first to eighth embodiments, or is cut out from the laminate.

The pair of main body films are superimposed on each other such that the sealant layers face each other, and peripheral edges thereof are heat-sealed to each other except for one end and a region in the vicinity thereof. The bottom film is folded in two so as to be mountain folded when viewed from the sealant layer side, and is placed between the pair of main body films so that the mountain folded portion is oriented toward the other end of the main body film at the position of the one end. A portion of the bottom film excluding a central portion thereof is heat-sealed to the pair of main body films. In addition, outer surfaces of the bottom film are bonded to each other at positions on both sides of the bottom portion of the package 110B.

In the package 110B, a notch is provided as an easily openable structure at a portion where the main body films are heat-sealed to each other. The easy-to-open structure may be provided so that, when the packaged article 100B is opened, a corner portion above the packaged article can be used as an opening portion. Alternatively, the packaged article 100B may further include a spout member and a lid body described in an eleventh embodiment later.

### <11> Eleventh embodiment

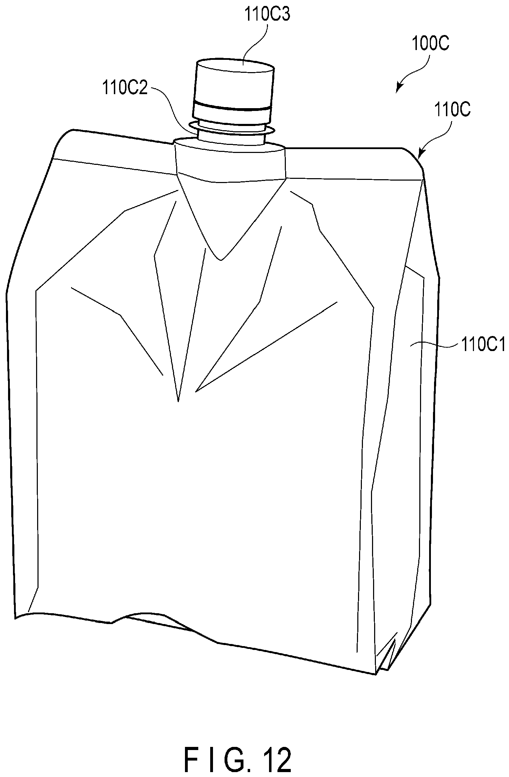

FIG. 12 is a view schematically illustrating a packaged article according to the eleventh embodiment of the present invention.

A packaged article 100C illustrated in FIG. 12 includes a package 110C and contents contained therein. The contents are, for example, the same as those described for the packaged article 100A.

The package 110C is a gusset type pouch. The package 110C includes a container body 110C1, a spout member 110C2, and a lid body 110C3.

The container body 110C1 includes a pair of main body films and a pair of side films.

The pair of main body films is overlapped such that the sealant layers face each other and a part of the spout member 110C2 is placed therebetween at one end. Peripheral edge portions of these main body films are heat-sealed to the spout member 110C2 at the one end and are heat-sealed to each other in the vicinity thereof. Further, the peripheral edge portions of these main body films are heat-sealed to each other at opposite ends except for regions on both sides.

Each of the side films is folded in two so as to be mountain folded when viewed from the sealant layer side. These side films are placed between the pair of main body films so that the mountain folded portions face each other on both sides of the main body films. In each of the side films, a part of the peripheral edge portion is heat-sealed to one of the main body films, and the remaining portion of the peripheral edge portion is heat-sealed to the other of the main body films. In addition, outer surfaces of the side films are bonded to each other at respective positions of an upper portion and a lower portion of the package 110C.

The container body 110C1 may further include a bottom film.

As described above, the spout member 110C2 includes a portion to be placed between the main body films and heat-sealed. The spout member 110C2 further includes an opening portion protruding outward from the container body 110C1. The opening portion has a substantially cylindrical shape, and a male screw is provided on an outer surface of the side wall. The lid body 110C3 has a bottomed cylindrical shape. The lid body 110C3 is provided with a female screw on the inner surface of the side wall and is screwed with the opening portion of the spout member 110C2.

### EXAMPLES

The results of the tests carried out for the present invention are described below.

### (1) Test A

### (1.1) Production of laminate

### (1.1.1) Example 1A

The laminate 10A2 illustrated in FIG. 2 was produced by the following method.

First, a polyethylene film having a thickness of 25 µm and a crystallinity of 58.5% was prepared as the substrate layer. The crystallinity shown in the present example and the examples and comparative examples described below was measured by the measurement method described above.

Next, a silicon oxide (SiOₓ) evaporated film was formed as the inorganic compound layer on one surface of the substrate layer. Thereafter, a printed layer was formed on the inorganic compound layer.

Next, an adhesive for dry lamination (urethane-based adhesive) was applied to the surface of the substrate layer on which the printed layer was formed. Then, a linear low-density polyethylene resin (LLDPE) film (thickness of 60 µm) as the sealant layer was bonded to the substrate layer with the adhesive agent layer interposed therebetween.

The laminate was prepared as described above.

### (1.1.2) Example 2A

The laminate 10A2 illustrated in FIG. 2 was produced by the same method as in Example 1A except that the inorganic compound layer was not provided.

### (1.1.3) Example 3A

The laminate 10A2 illustrated in FIG. 2 was produced by the same method as in Example 1A except that a polyamine-based gas barrier adhesive was used instead of using a dry lamination adhesive (urethane-based adhesive) as the adhesive.

### (1.1.4) Example 4A

The laminate 10A2 illustrated in FIG. 2 was produced by the same method as in Example 1A except that a polyethylene film having a thickness of 25 µm and a crystallinity of 71.8% was used instead of using a polyethylene film having a thickness of 25 µm and a crystallinity of 58.5% as the substrate layer.

### (1.1.5) Example 5A

The laminate 10A2 illustrated in FIG. 2 was produced by the same method as in Example 1A except that a polyethylene film having a thickness of 25 µm and a crystallinity of 55.9% was used instead of using a polyethylene film having a thickness of 25 µm and a crystallinity of 58.5% as the substrate layer.

### (1.1.6) Example 6A

The laminate 10A2 illustrated in FIG. 2 was produced by the same method as in Example 1A except that a polyethylene film having a thickness of 20 µm and a crystallinity of 54.1% was used instead of using a polyethylene film having a thickness of 25 µm and a crystallinity of 58.5% as the substrate layer.

### (1.1.7) Example 7A

The laminate 10A2 illustrated in FIG. 2 was produced by the same method as in Example 1A except that a polyethylene film having a thickness of 30 µm and a crystallinity of 55.9% was used instead of using a polyethylene film having a thickness of 25 µm and a crystallinity of 58.5% as the substrate layer.

### (1.1.8) Example 8A

The laminate 10A2 illustrated in FIG. 2 was produced by the same method as in Example 1A except that a linear low-density polyethylene resin (LLDPE) film having a thickness of 40 µm was used as the sealant layer in place of the 60 µm-thick linear low-density polyethylene resin (LLDPE) film.

### (1.1.9) Example 9A

The laminate 10A2 illustrated in FIG. 2 was produced by the same method as in Example 1A except that a linear low density polyethylene resin (LLDPE) film having a thickness of 120 µm was used as the sealant layer in place of the 60 pm-thick linear low-density polyethylene resin (LLDPE) film.

### (1.1.10) Example 10 A

The laminate 10A2 illustrated in FIG. 2 was produced by the same method as in Example 1A except that the inorganic compound layer was not provided, and a polyamine-based gas barrier adhesive was used instead of using an adhesive for dry lamination (urethane-based adhesive) as the adhesive.

### (1.1.11) Example 11 A

The laminate 10A2 illustrated in FIG. 2 was produced by the same method as in Example 1A except that the inorganic compound layer was not provided, and a urethane-based gas barrier adhesive was used instead of using an adhesive for dry lamination (urethane-based adhesive) as the adhesive.

### (1.1.12) Comparative Example 1A

A laminate was produced by the same method as in Example 1A except that a polyethylene film having a thickness of 32 µm and a crystallinity of 14.8% was used instead of using a polyethylene film having a thickness of 25 µm and a crystallinity of 58.5% as the substrate layer.

### (1.1.13) Comparative Example 2A

A laminate was produced by the same method as in Example 1A except that a polyethylene film having a thickness of 25 µm and a crystallinity of 20.6% was used instead of using a polyethylene film having a thickness of 25 µm and a crystallinity of 58.5% as the substrate layer.

### (1.2) Measurement and evaluation method

The substrate layer used in the production of the laminate was subjected to in-plane measurement by the wide-angle X-ray diffraction method described above. Then, it was examined whether the diffraction pattern obtained by this measurement had a sharp diffraction peak corresponding to the (110) plane.

The sealing property, heat resistance, visibility, and gas barrier property of the laminate were evaluated. Methods for evaluating the sealing property, heat resistance, visibility, and gas barrier property will be described below.

### (1.2.1) Method for evaluating sealing property

Samples obtained by cutting the laminates into a 10 cm square were folded in two so that the sealant layer was on the inner side, and heat-sealed using a heat seal tester. Specifically, first, the lower surface seal temperature was set to 100°C, the upper surface seal temperature was set to 120°C, and a pressure of 0.1 MPa was applied for one second. Then, the presence or absence of melting of the sealing surface was confirmed, and the region where the heat seal bar was applied on the upper surface of the sample folded in two was observed. In a case where the seal surface was not melted and the sample upper surface was not melted, the upper surface seal temperature was increased by 10°C while the lower surface seal temperature was fixed at 100°C until at least one of the seal surface and the sample upper surface was melted, and pressurization and observation similar to the above were performed. Then, the sealing property was evaluated according to the following criteria.
A: There was no melting on the upper surface of the sample, and there was no problem in appearance.
B: The upper surface of the sample was melted, and there was a problem in appearance.

### (1.2.2) Method for evaluating heat resistance

Samples obtained by cutting the laminates into a 10 cm square were folded in two so that the sealant layer was on the inner side. Next, the lower surface seal temperature of the heat seal tester was set to 30°C, the upper surface seal temperature was set to 170°C, and a pressure of 0.2 MPa was applied to the sample folded in two for one second. Then, the presence or absence of melting of the sealing surface was confirmed, and whether or not the region of the upper surface of the sample folded in two, to which the heat seal bar was applied, adhered to the heat seal bar was observed, and the heat resistance was evaluated according to the following criteria.
A: The upper surface of the sample did not adhere to the heat seal bar.
B: The upper surface of the sample was adhered to the heat seal bar.

### (1.2.3) Method for evaluating visibility

The pattern displayed on the printed layer was visually observed from the substrate layer side, and the visibility was evaluated according to the following criteria.
A: The pattern displayed on the printed layer was clearly confirmed.
B: The pattern displayed on the printed layer was blurred and unclear.

### (1.2.4) Method for evaluating gas barrier property

The laminate was subjected to a boiling treatment, and then the oxygen transmission rate (OTR) at 30°C and a relative humidity of 70% was measured. This measurement was performed in accordance with JIS K-7126, Method B. Then, the gas barrier property was evaluated with reference to the following criteria for the oxygen transmission rate.
A: OTR was less than 10 cc/m²·day·atm.
B: OTR was 10 cc/m²·day·atm or more.

### (1.3) Results

The results of the above measurement and evaluation are summarized in the following Table 1-1 and Table 1-2.

### [Table 1-1]

**Table 1-1**

| | | | Ex.1A | Ex.2A | Ex.3A | Ex.4A | Ex.5A | Ex.6A | Ex.7A |
|---|---|---|---|---|---|---|---|---|---|
| Structure /Material | Substrate layer | Material | PE | PE | PE | PE | PE | PE | PE |
| | | Thickness (µm) | 25 | 25 | 25 | 25 | 25 | 20 | 30 |
| | | Crystallinity (%) | 58.5 | 58.5 | 58.5 | 71.8 | 55.9 | 54.1 | 55.9 |
| | | In-plane diffraction peak | Present | Present | Present | Present | Absent | Present | Present |
| | | Haze(%) | 1.6 | 1.6 | 1.6 | 4.1 | 5.9 | 1.4 | 2 |
| | Inorganic Compd. layer | Material | Silicon oxide | Absent | Silicon oxide | Silicon oxide | Silicon oxide | Silicon oxide | Silicon oxide |
| | Printed layer | Presence or absence | Present | Present | Present | Present | Present | Present | Present |
| | Adhesive agent layer | Material | Urethane-based adhesive | Urethane-based adhes ive | Polyam ine-based gas barrier adhesive | Urethane-based adhesive | Urethane-based adhesive | Urethane-based adhesive | Urethane-based adhesive |
| | Sealant layer | Material | LLDPE | LLDPE | LLDPE | LLDPE | LLDPE | LLDPE | LLDPE |
| | | Thickness (µm) | 60 | 60 | 60 | 60 | 60 | 60 | 60 |
| Evaluation / result | | Sealing property | A | A | A | A | A | A | A |
| | | Heat resistance (170°C) | A | A | A | A | A | A | A |
| | | Visibility | A | A | A | A | A | A | A |
| | | Gas barrier property | A | B | A | A | A | A | A |

### [Table 1-2]

**Table 1-2**

| | | | Ex.8A | Ex.9A | Ex.10A | Ex.11A | Comp.Ex.1A | Comp.Ex.2A |
|---|---|---|---|---|---|---|---|---|
| Structure /Material | Substrate layer | Material | PE | PE | PE | PE | PE | PE |
| | | Thickness (µm) | 25 | 25 | 25 | 25 | 32 | 25 |
| | | Crystallinity (%) | 58.5 | 58.5 | 58.5 | 58.5 | 14.8 | 20.6 |
| | | In-plane diffraction peak | Present | Present | Present | Present | Absent | Absent |
| | | Haze (%) | 1.6 | 1.6 | 1.6 | 1.6 | 21.5 | 18.9 |
| | Inorganic Compd. layer | Material | Silicon oxide | Silicon oxide | Absent | Absent | Silicon oxide | Silicon oxide |
| | Printed layer | Presence or absence | Present | Present | Present | Present | Present | Present |
| | Adhesive agent layer | Material | Urethane-based adhesive | Urethane-based adhesive | Polyamine-based gas barrier adhes ive | Urethane-based gas barrier adhesive | Urethane-based adhesive | Urethane-based adhesive |
| | Sealant layer | Material | LLDPE | LLDPE | LLDPE | LLDPE | LLDPE | LLDPE |
| | | Thickness (µm) | 40 | 120 | 60 | 60 | 60 | 60 |
| Evaluation / result | | Sealing property | A | A | A | A | B | B |
| | | Heat resistance (170°C) | A | A | A | A | B | B |
| | | Visibility | A | A | A | A | B | B |
| | | Gas barrier property | A | A | B | B | A | A |

As shown in Table 1-1 and 1-2, the laminates in which the crystallinity of the substrate layer was 35% or more had good sealing property, heat resistance, and visibility. On the other hand, the laminates in which the crystallinity of the substrate layer was less than 35% had insufficient sealing property, heat resistance, and visibility.

### (2) Test B

### (2.1) Production of laminate

### (2.1.1) Example 1B

The laminate 10B illustrated in FIG. 3 was produced by the following method. Note that, in this example, an anchor coat layer was further provided between the substrate layer 1 and the gas barrier layer 5, and an inorganic compound layer and a coating layer were provided as the gas barrier layer 5.

First, an anchor coat agent and a coating liquid for forming a protective layer and a coating layer were prepared by the following method. In this example, the protective layer and the coating layer were formed using the same coating liquid.

### (Preparation of anchor coat agent)

The acrylic polyol and the tolylenediisocyanate were mixed so that the number of NCO groups of the tolylenediisocyanate was equal to the number of OH groups of the acrylic polyol, and the mixture was diluted with ethyl acetate so that the total solid content (the total amount of the acrylic polyol and the tolylenediisocyanate) was 5% by mass. β- (3,4-epoxycyclohexyl) trimethoxysilane was further added to the diluted mixed liquid in an amount of 5 parts by mass with respect to 100 parts by mass of the total amount of the acrylic polyol and the tolylenediisocyanate, and these were mixed to prepare an anchor coat agent.

### (Preparation of coating liquid for forming protective layer and coating layer)

A coating liquid for forming a protective layer and a coating layer (hereinafter, also simply referred to as "coating liquid") containing an organic-inorganic mixture were prepared by mixing the following liquids A, B, and C at a mass ratio of 70/20/10, respectively.

Solution A: A hydrolysis solution of 5 mass% (in terms of SiO₂) of a solid content obtained by adding 72.1 g of 0.1 N hydrochloric acid to 17.9 g of tetraethoxysilane (Si(OC₂H₅)₄) and 10 g of methanol, followed by hydrolysis by stirring for 30 minutes.

Liquid B: 5 mass% water/methanol solution of polyvinyl alcohol (mass ratio of water and methanol is 95:5).

Liquid C: a hydrolysis solution prepared by diluting 1,3,5-tris (3-trialkoxysilyl propyl) isocyanurate to a solid content of 5 mass% with a mixed liquid of water/isopropyl alcohol (the mass ratio of water and isopropyl alcohol is 1 : 1).

As the substrate layer, a polyethylene film having a thickness of 25 µm, a crystallinity of 58.5%, a haze of 1.6%, and a density of 0.94 g/cm³ was prepared. The crystallinity shown in the present example and the examples and comparative examples described below was measured by the measurement method described above.

Next, one surface of the substrate layer was subjected to a corona treatment. Subsequently, the coating liquid prepared as described above was applied to the corona-treated surface of the substrate layer by a gravure coating method and dried to form a protective layer composed of an organic-inorganic mixture and having a thickness of 0.5 um (dry state).

Next, the other surface of the substrate layer was subjected to a corona treatment. Subsequently, the anchor coat agent described above was applied to the corona-treated surface of the substrate layer by a gravure coating method to form an anchor coat layer having a thickness of 0.1 um (dry state).

Subsequently, a silicon oxide (SiOₓ) evaporated film was formed as an inorganic compound layer with a thickness of 40 nm using an electron beam heating vacuum deposition apparatus. Subsequently, the coating liquid prepared as described above was applied to the inorganic compound layer to form a coating layer composed of an organic-inorganic mixture and having a thickness of 0.3 µm (dry state).

Thereafter, the coating layer was pattern-printed with an aqueous flexo ink to form a printed layer.

Next, an adhesive for dry lamination (urethane-based adhesive) was applied to the surface of the substrate layer on which the printed layer was formed. Then, a linear low-density polyethylene resin (LLDPE) film (thickness of 60 µm) as the sealant layer was bonded to the substrate layer with the adhesive agent layer interposed therebetween.

The laminate was prepared as described above.

### (2.1.2) Example 2B

The laminate 10B illustrated in FIG. 3 was produced by the same method as in Example 1B except that a polyethylene film having a thickness of 25 µm, a crystallinity of 55.9%, a haze of 5.9%, and a density of 0.95 g/cm³ was used as a substrate layer instead of the above-mentioned polyethylene film having a crystallinity of 58.5%. This polyethylene film is a biaxially stretched film, and is subjected to corona treatment on one side.

### (2.1.3) Example 3B

The laminate 10B illustrated in FIG. 3 was produced by the same method as in Example 2B except that a protective layer was not provided.

### (2.1.4) Example 4B

The laminate 10B illustrated in FIG. 3 was produced by the same method as in Example 1B except that a protective layer made of a urethane-based resin and having a thickness of 0.5 µm was formed instead of forming a protective layer having a thickness of 0.5 µm by applying a polyamideimide resin.

### (2.1.5) Example 5B

The laminate 10B illustrated in FIG. 3 was produced by the same method as in Example 1B except that a protective layer made of a urethane-based resin and having a thickness of 1 µm was formed instead of forming a protective layer having a thickness of 0.5 µm by applying a polyamideimide resin.

### (2.1.6) Example 6B

The laminate 10B illustrated in FIG. 3 was produced by the same method as in Example 1B except that a protective layer made of an ethylene-vinyl alcohol copolymer (EVOH) and having a thickness of 1 µm was formed instead of forming a protective layer having a thickness of 0.5 µm by applying a polyamideimide resin.

### (2.1.7) Example 7B

The laminate 10B illustrated in FIG. 3 was produced by the same method as in Example 1B except that a protective layer made of an acrylic resin and having a thickness of 1 µm was formed instead of forming a protective layer having a thickness of 0.5 µm by applying a polyamideimide resin.

### (2.1.8) Comparative Example 1B

The laminate 10B illustrated in FIG. 3 was produced in the same manner as in Example 1B except for the following. That is, the protective layer was not provided. Further, as the substrate layer, a polyethylene film having a thickness of 25 µm, a crystallinity of 27.5%, a haze of 21.5%, and a density of 0.950 g/cm³ was used instead of the above-mentioned polyethylene film having a crystallinity of 58.5%. This polyethylene film is subjected to corona treatment on one side.

### (2.2) Measurement and evaluation method

The substrate layer used in the production of the laminate was subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, visibility, and recyclability of the laminate were evaluated. Methods for evaluating sealing property, heat resistance, visibility, and recyclability will be described below.

### (2.2.1) Method for evaluating sealing property

Samples obtained by cutting the laminates into a 10 cm square were folded in two so that the sealant layer was on the inner side, and heat-sealed using a heat seal tester. Specifically, a heat of 140°C and a pressure of 0.1 MPa were applied to the sample folded in two for one second. Then, a region of the surface of the sample to which the heat seal bar was applied was observed, and the sealing property was evaluated according to the following criteria.
A: There was no melting on the surface of the sample, and there was no problem in appearance.
B: The surface of the sample was melted, and there was a problem in appearance.

### (2.2.2) Method for evaluating heat resistance

Samples obtained by cutting the laminates into a 10 cm square were folded in two so that the sealant layer was on the inner side. Next, the lower surface seal temperature of the heat seal tester was set to 30°C, the upper surface seal temperature was set to 170°C, and a pressure of 0.2 MPa was applied to the sample folded in two for one second. Then, the presence or absence of melting of the sealing surface was confirmed, and whether or not the region of the upper surface of the sample folded in two, to which the heat seal bar was applied, adhered to the heat seal bar was observed, and the heat resistance was evaluated according to the following criteria.
A: The upper surface of the sample did not adhere to the heat seal bar.
B: The upper surface of the sample was adhered to the heat seal bar.

Further, for the laminate having a protective layer, heat resistance was further evaluated in the same manner as described above except that the upper surface seal temperature was set to 190°C.

### (2.2.3) Method for evaluating visibility

The visibility was evaluated by the method described in (1.2.3).

### (2.2.4) Method for evaluating recyclability

The ratio of polyethylene to the total mass of the laminate was calculated. This ratio was referred to the following criteria to evaluate the recyclability. Here, the evaluation A means excellent recyclability as a monomaterial.
A: The ratio of polyethylene was 90 mass% or more.
B: The ratio of polyethylene was less than 90 mass%.

### (2.3) Results

The results of the above measurement and evaluation are summarized in Table 2 below.

### [Table 2]

**Table 2**

| | | | Ex.1B | Ex.2B | Ex.3B | Ex.4B |
|---|---|---|---|---|---|---|
| Structure /Material | Protective layer | Material | Organic-inorganic mixture | Organic-inorganic mixture | Absent | Urethane-based resin |
| | | Thickness (µm) | 0.5 | 0.5 | - | 0.5 |
| | Substrate layer | Material | PE | PE | PE | PE |
| | | Thickness (µm) | 25 | 25 | 25 | 25 |
| | | Crystallinity (%) | 58.5 | 55.9 | 55.9 | 58.5 |
| | | In-plane diffraction peak | Present | Absent | Absent | Present |
| | | Haze (%) | 1.6 | 5.9 | 5.9 | 1.6 |
| | Anchor coat layer | Material | Polyester-based polyurethane resin | Polyester-based polyurethane resin | Polyester-based polyurethane resin | Polyester-based polyurethane resin |
| | | Thickness (µm) | 0.1 | 0.1 | 0.1 | 0.1 |
| | Inorganic compd. Layer | Material | Silicon oxide | Silicon oxide | Silicon oxide | Silicon oxide |
| | | Thickness (nm) | 40 | 40 | 40 | 40 |
| | Corting layer | Material | Organic-inorganic mixture | Organic-inorganic mixture | Organic-inorganic mixture | Organic-inorganic mixture |
| | | Thickness (µm) | 0.3 | 0.3 | 0.3 | 0.3 |
| | Printed layer | Presence or absence | Present | Present | Present | Present |
| | Adhesive agent layer | Material | Urethane-based adhesive | Urethane-based adhesive | Urethane-based adhesive | Urethane-based adhesive |
| | Sealant layer | Material | LLDPE | LLDPE | LLDPE | LLDPE |
| | | Thickness (µm) | 60 | 60 | 60 | 60 |
| Evaluation / result | | Sealing property | A | A | B | A |
| | | Heat resistance (170°C) | A | A | A | A |
| | | Heat resistance (190°C) | A | A | - | A |
| | | Visibility | A | A | A | A |
| | | Recyclability | A | A | A | A |
| | | Polyethylene ratio (mass%) | 93 | 93 | 94 | 93 |

| | | | Ex.5B | Ex.6B | Ex.7B | Comp.Ex.1B |
|---|---|---|---|---|---|---|
| Structure /Material | Protective layer | Material | Urethane-based resin | EVOH | Acrylic resin | Absent |
| | | Thickness (µm) | 1 | 1 | 1 | - |
| | Substrate layer | Material | PE | PE | PE | PE |
| | | Thickness (µm) | 25 | 25 | 25 | 25 |
| | | Crystallinity (%) | 58.5 | 58.5 | 58.5 | 27.5 |
| | | In-plane diffraction peak | Present | Present | Present | Absent |
| | | Haze (%) | 1.6 | 1.6 | 1.6 | 21.5 |
| | Anchor coat layer | Material | Polyester-based polyurethane resin | Polyester-based polyurethane resin | Polyester-based polyurethane resin | Polyester-based polyurethane resin |
| | | Thickness (µm) | 0.1 | 0.1 | 0.1 | 0.1 |
| | Inorganic compd. Layer | Material | Silicon oxide | Silicon oxide | Silicon oxide | Silicon oxide |
| | | Thickness (nm) | 40 | 40 | 40 | 40 |
| | Corting layer | Material | Organic-inorganic mixture | Organic-inorganic mixture | Organic-inorganic mixture | Organic-inorganic mixture |
| | | Thickness (µm) | 0.3 | 0.3 | 0.3 | 0.3 |
| | Printed layer | Presence or absence | Present | Present | Present | Present |
| | Adhesive agent layer | Material | Urethane-based adhesive | Urethane-based adhesive | Urethane-based adhesive | Urethane-based adhesive |
| | Sealant layer | Material | LLDPE | LLDPE | LLDPE | LLDPE |
| | | Thickness (µm) | 60 | 60 | 60 | 60 |
| Evaluation / result | | Sealing property | A | A | A | B |
| | | Heat resistance (170°C) | A | A | A | B |
| | | Heat resistance (190°C) | A | A | A | - |
| | | Visibility | A | A | A | B |
| | | Recyclability | A | A | A | A |
| | | Polyethylene ratio (mass%) | 93 | 93 | 93 | 94 |

As shown in Table 2, the laminates in which the substrate layer had a crystallinity of 35% or more were all satisfactory in heat resistance and visibility while having recyclability. The laminate in which the crystallinity of the substrate layer was 35% or more and the protective layer was provided also had excellent sealing property. On the other hand, the laminate having the substrate layer with the crystallinity of less than 35% and having no protective layer is insufficient in sealing property, heat resistance, and visibility.

### (3) Test C

### (3.1) Production of laminate

### (3.1.1) Example 1C

The laminate 10C illustrated in FIG. 4 was produced by the following method. Note that, in this example, an anchor coat layer was further provided between the substrate layer 1 and the inorganic compound layer 5.

First, an anchor coat agent and a coating liquid for forming the coating layer were prepared by the same method as in Example 1B. In addition, as a coating liquid for forming a protective layer, an organic solvent solution of a polyamideimide resin (nonvolatile component concentration: 5% by mass) was prepared.

As the substrate layer, a polyethylene film having a thickness of 25 µm, a crystallinity of 58.5%, a haze of 1.6%, and a density of 0.950 g/cm³ was prepared. This polyethylene film is subjected to a corona treatment on both sides. The crystallinity shown in the present example and the examples and comparative examples described below was measured by the measurement method described above.

Next, the coating liquid containing the polyamideimide prepared above was applied to one corona-treated surface of the substrate layer by a gravure coating method and dried to form a protective layer having a thickness of 0.5 µm.

Next, the anchor coat agent described above was applied to the other corona-treated surface of the substrate layer by a gravure coating method to form an anchor coat layer having a thickness of 0.1 µm (dry state).

Subsequently, a silicon oxide (SiOₓ) evaporated film was formed as an inorganic compound layer with a thickness of 40 nm using an electron beam heating vacuum deposition apparatus. Subsequently, the coating liquid for forming a coating layer prepared as described above was applied to the inorganic compound layer to form a coating layer composed of an organic-inorganic mixture and having a thickness of 0.3 µm (dry state).

Thereafter, an image was formed on the coating layer by a flexographic printing method using aqueous flexo ink to form the printed layer.

Next, an adhesive for dry lamination (urethane-based adhesive) was applied to the surface of the substrate layer on which the printed layer was formed. Then, a linear low-density polyethylene resin (LLDPE) film (thickness of 60 µm) as the sealant layer was bonded to the substrate layer with the adhesive agent layer interposed therebetween.

The laminate was prepared as described above.

### (3.1.2) Example 2C

The laminate 10C illustrated in FIG. 4 was produced by the same method as in Example 1C except that the thickness of the protective layer was changed from 0.5 µm to 1 µm and a coating layer was not provided.

### (3.1.3) Example 3C

The laminate 10C illustrated in FIG. 4 was produced by the same method as in Example 1C except that the thickness of the protective layer was changed from 0.5 µm to 3 µm.

### (3.1.4) Example 4C

The laminate 10C illustrated in FIG. 4 was produced by the same method as in Example 1C except that a protective layer was not provided.

### (3.1.5) Comparative Example 1C

The laminate 10C illustrated in FIG. 4 was produced in the same manner as in Example 1C, except for the following. That is, the protective layer was not provided. Further, as the substrate layer, a polyethylene film having a thickness of 25 µm, a crystallinity of 27.6%, and a haze of 21.5% was used instead of the above-mentioned polyethylene film having a crystallinity of 58.5%.

### (3.2) Measurement and evaluation method

The substrate layer used in the production of the laminate was subjected to in-plane measurement by the wide-angle X-ray diffraction method described above. Then, it was examined whether the diffraction pattern obtained by this measurement had a sharp diffraction peak corresponding to the (110) plane.

Further, the sealing property, heat resistance, visibility, and recyclability of the laminate were evaluated. Methods for evaluating sealing property, heat resistance, visibility, and recyclability will be described below.

### (3.2.1) Method for evaluating sealing property

The sealing property was evaluated by the method described in (1.2.1).

### (3.2.2) Method for evaluating heat resistance

The heat resistance was evaluated by the method described in (2.2.2).

### (3.2.3) Method for evaluating visibility

The visibility was evaluated by the method described in (1.2.3).

### (3.2.3) Method for evaluating recyclability

The recyclability was evaluated by the method described in (2.2.4).

### (3.3) Results

The results of the above measurement and evaluation are summarized in Table 3 below.

### [Table 3]

**Table 3**

| | | | Ex. 1C | Ex.2C | Ex.3C | Ex.4C | Comp.Ex.1C |
|---|---|---|---|---|---|---|---|
| Structure /Material | Protective layer | Material | Polyamideimide resin | Polyamideimide resin | Polyamideimide resin | Absent | Absent |
| | | Thickness (µm) | 0.5 | 1 | 3 | - | - |
| | Substrate layer | Material | PE | PE | PE | PE | PE |
| | | Thickness (µm) | 25 | 25 | 25 | 25 | 25 |
| | | Crystallinity (%) | 58.5 | 58.5 | 58.5 | 58.5 | 27.6 |
| | | In-plane diffraction peak | Present | Present | Present | Present | Absent |
| | | Haze (%) | 1.6 | 1.6 | 1.6 | 1.6 | 21.5 |
| | Anchor coat layer | Material | Polyester-based polyurethane resin | Polyester-based polyurethane resin | Polyester-based polyurethane resin | Polyester-based polyurethane resin | Polyester-based polyurethane resin |
| | | Thickness (µm) | 0.1 | 0.1 | 0.1 | 0.1 | 0.1 |
| | Inorganic compd. I ayer | Material | Silicon oxide | Silicon oxide | Silicon oxide | Silicon oxide | Silicon oxide |
| | | Thickness (nm) | 40 | 40 | 40 | 40 | 40 |
| | Corting layer | Material | Organic-inorganic mixture | Absent | Organic-inorganic mixture | Organic-inorganic mixture | Organic-inorganic mixture |
| | | Thickness (µm) | 0.3 | - | 0.3 | 0.3 | 0.3 |
| | Printed layer | Presence or absence | Present | Present | Present | Present | Present |
| | Adhesive agent layer | Material | Urethane-based adhesive | Urethane-based adhesive | Urethane-based adhesive | Urethane-based adhesive | Urethane-based adhesive |
| | Sealant layer | Material | LLDPE | LLDPE | LLDPE | LLDPE | LLDPE |
| | | Thickness (µm) | 60 | 60 | 60 | 60 | 60 |
| Evaluation / result | | Sealing property | A; 140°C | A; 150°C | A; 170°C | B; 130°C | B; 130°C |
| | | Heat resistance (170°C) | A | A | A | A | B |
| | | Heat resistance (190°C) | A | A | A | - | - |
| | | Visibility | A | A | A | A | B |
| | | Recyclability | A | A | A | A | A |
| | | Polyethylene ratio (mass%) | 93 | 93 | 93 | 94 | 94 |

As shown in Table 3, the laminates in which the substrate layer had a crystallinity of 35% or more were all satisfactory in heat resistance and visibility while having recyclability. The laminate in which the crystallinity of the substrate layer was 35% or more and the protective layer was provided also had excellent sealing property. On the other hand, the laminate having the substrate layer with the crystallinity of less than 35% and having no protective layer is insufficient in sealing property, heat resistance, and visibility.

### (4) Test D

### (4.1) Production of laminate

### (4.1.1) Example 1D

The laminate 10D illustrated in FIG. 5 was produced by the following method.

First, a polyethylene film having a thickness of 25 µm, a crystallinity of 58.5%, a haze of 1.6%, and a density of 0.94 g/cm³ was prepared as a substrate layer and an intermediate layer. The crystallinity shown in the present example and the examples and comparative examples described below was measured by the measurement method described above.

Next, a silicon oxide (SiOₓ) evaporated film was formed as an inorganic compound layer on the intermediate layer so as to have a thickness of 50 nm.

An adhesive agent for dry lamination (urethane-based adhesive agent) was applied onto the substrate layer to form a first adhesive agent layer. The substrate layer and the intermediate layer were bonded to each other such that the substrate layer and the inorganic compound layer faced each other with the first adhesive agent layer interposed therebetween. Next, a printed layer was formed on the back surface of the surface of the intermediate layer on which the inorganic compound layer was formed.

Next, a linear low-density polyethylene resin (LLDPE) film (thickness: 60 µm) was prepared as a sealant layer, and an adhesive for dry lamination (urethane-based adhesive) was applied onto the sealant layer to form a second adhesive agent layer. The substrate layer and the sealant layer were bonded to each other such that the sealant layer and the printed layer faced each other with the second adhesive agent layer interposed therebetween.

The laminate was prepared as described above.

### (4.1.2) Example 2D

The laminate 10D illustrated in FIG. 5 was produced by the same method as in Example 1D except that a polyamine-based adhesive having a gas barrier property was used instead of the urethane-based adhesive as an adhesive used for the first adhesive agent layer and the second adhesive agent layer.

### (4.1.3) Example 3D

The laminate 10D illustrated in FIG. 5 was produced by the same method as in Example 1D except that a polyethylene film having a thickness of 25 µm, a crystallinity of 71.8%, a haze of 4.1%, and a density of 0.95 g/cm³ was used as a substrate layer instead of the above-mentioned polyethylene film having a crystallinity of 58.5%. This polyethylene film is a longitudinally uniaxially stretched film, and is subjected to a single-sided corona treatment.

### (4.1.4) Example 4D

The laminate 10D illustrated in FIG. 5 was produced in the same manner as in Example 1D except for the following. In other words, instead of using the above-mentioned polyethylene film having a crystallinity of 58.5%, a polyethylene film having a thickness of 25 µm, a crystallinity of 55.9%, a haze of 5.9, and a density of 0.95 g/cm³ was used as the substrate layer. This polyethylene film is a biaxially stretched film, and is subjected to corona treatment on one side. Furthermore, instead of using the above-mentioned polyethylene film having a crystallinity of 58.5%, a high-density polyethylene film having a thickness of 25 µm, a crystallinity of 71.8%, a haze of 4.1, and a density of 0.95 g/cm³ was used as the intermediate layer. This polyethylene film is a longitudinally uniaxially stretched film, and is subjected to a single-sided corona treatment.

### (4.1.5) Example 5D

The laminate 10D illustrated in FIG. 5 was produced by the same method as in Example 1D except that a polyethylene film having a thickness of 25 µm, a crystallinity of 14.8%, a haze of 21.5%, and a density of 0.950 g/cm³ was used as an intermediate layer instead of the above-mentioned polyethylene film having a crystallinity of 58.5%. This polyethylene film is subjected to corona treatment on one side.

### (4.1.6) Example 6D

The laminate 10D illustrated in FIG. 5 was produced by the same method as in Example 1D except that the gas barrier layer was not provided.

### (4.1.7) Comparative Example 1D

The laminate 10D illustrated in FIG. 5 was produced by the same method as in Example 1D except that a polyethylene film having a thickness of 25 um, a crystallinity of 14.8%, a haze of 21.5%, and a density of 0.950 g/cm³ was used as the substrate layer instead of the above-mentioned polyethylene film having a crystallinity of 58.5%. This polyethylene film is subjected to corona treatment on one side.

### (4.1.8) Comparative Example 2D

The laminate 10D illustrated in FIG. 5 was produced by the same method as in Example 1D except that a polyethylene film having a thickness of 25 µm, a crystallinity of 14.8%, a haze of 21.5%, and a density of 0.950 g/cm³ was used as the substrate layer and the intermediate layer instead of using the above-mentioned polyethylene film having a crystallinity of 58.5%. This polyethylene film is subjected to corona treatment on one side.

### (4.1.9) Comparative Example 3D

The laminate 10D illustrated in FIG. 5 was produced in the same manner as in Example 1D except for the following. In other words, instead of using the above-mentioned polyethylene film having a crystallinity of 58.5%, a polyethylene film having a thickness of 25 µm, a crystallinity of 14.8%, a haze of 21.5%, and a density of 0.950 g/cm³ was used as the substrate layer. This polyethylene film is subjected to corona treatment on one side. Further, no gas barrier layer was provided.

### (4.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

The sealing property, heat resistance, visibility, puncture resistance, and gas barrier property of the laminate were evaluated. Methods for evaluating sealing property, heat resistance, visibility, puncture resistance, and gas barrier property will be described below.

### (4.2.1) Method for evaluating sealing property

The sealing property was evaluated by the method described in (2.2.1).

### (4.2.2) Method for evaluating heat resistance

The heat resistance was evaluated by the method described in (1.2.2).

### (4.2.3) Method for evaluating visibility

The visibility was evaluated by the method described in (1.2.3).

### (4.2.4) Method for evaluating puncture resistance

A needle having a radius of 0.5 mm and a hemispherical tip is pressed against the laminate at a speed of 50 mm/min from the substrate layer side, and the maximum force until the needle penetrates is measured. This measurement was performed multiple times, and the arithmetic average of the maximum forces was obtained as the puncture resistance.

### (4.2.5) Method for evaluating gas barrier property

The gas barrier property was evaluated by the method described in (1.2.4)_

### (4.3) Results

The results of the above measurement and evaluation are summarized in the following Table 4-1 and Table 4-2.

### [Table 4-1]

**Table 4-1**

| | | | Ex.1D | Ex.2D | Ex.3D | Ex.4D |
|---|---|---|---|---|---|---|
| Structure /Material | Substrate layer | Material | PE | PE | PE | PE |
| | | Thickness (µm) | 25 | 25 | 25 | 25 |
| | | Crystallinity (%) | 58.5 | 58.5 | 71.8 | 55.9 |
| | | In-plane diffraction peak | Present | Present | Present | Absent |
| | | Haze (%) | 1.6 | 1.6 | 4.1 | 5.9 |
| | 1st adhesive agent layer | Material | Urethane-based adhesive | Polyamine-based gas barrier adhesive | Urethane-based adhesive | Urethane-based adhesive |
| | Inorganic compd. Layer | Material | Silicon oxide | Silicon oxide | Silicon oxide | Silicon oxide |
| | | Thickness (nm) | 50 | 50 | 50 | 50 |
| | Intermediate layer | Material | PE | PE | PE | PE |
| | | Thickness (µm) | 25 | 25 | 25 | 25 |
| | | Crystallinity (%) | 58.5 | 58.5 | 58.5 | 71.8 |
| | | In-plane diffraction peak | Present | Present | Present | Present |
| | | Haze (%) | 1.6 | 1.6 | 1.6 | 4.1 |
| | Printed laver | Presence or absence | Present | Present | Present | Present |
| | 2nd adhesive agent layer | Material | Urethane-based adhesive | Polyamine-based gas barrier adhesive | Urethane-based adhesive | Urethane-based adhesive |
| | Sealant layer | Material | LLDPE | LLDPE | LLDPE | LLDPE |
| Evaluation / result | | Sealing property | A | A | A | A |
| | | Heat resistance (170°C) | A | A | A | A |
| | | Visibility | A | A | A | A |
| | | Gas barrier property | A | A | A | A |
| | | Puncture resistance (N) | 9.0 | 9.5 | 9.6 | 8.7 |

| | | | Ex.5D | Comp.Ex.1D | Comp.Ex.2D |
|---|---|---|---|---|---|
| Structure /Material | Substrate layer | Material | PE | PE | PE |
| | | Thickness (µm) | 25 | 25 | 25 |
| | | Crystallinity (%) | 58.5 | 14.8 | 14.8 |
| | | In-plane diffraction peak | Present | Absent | Absent |
| | | Haze (%) | 1.6 | 21.5 | 21.5 |
| | 1st adhesive agent layer | Material | Urethane-based adhesive | Urethane-based adhesive | Urethane-based adhesive |
| | Inorganic compd. Layer | Material | Silicon oxide | Silicon oxide | Silicon oxide |
| | | Thickness (nm) | 50 | 50 | 50 |
| | Intermediate layer | Material | PE | PE | PE |
| | | Thickness (µm) | 25 | 25 | 25 |
| | | Crystallinity (%) | 14.8 | 58.5 | 14.8 |
| | | In-plane diffraction peak | Absent | Present | Absent |
| | | Haze (%) | 21.5 | 1.6 | 21.5 |
| | Printed layer | Presence or absence | Present | Present | Present |
| | 2nd adhesive agent layer | Material | Urethane-based adhesive | Urethane-based adhesive | Urethane-based adhesive |
| | Sealant layer | Material | LLDPE | LLDPE | LLDPE |
| Evaluation / result | | Sealing property | A | B | B |
| | | Heat resistance (170°C) | A | B | B |
| | | Visibility | B | B | B |
| | | Gas barrier property | A | A | A |
| | | Puncture resistance (N) | 7.5 | 8.2 | 5.1 |

### [Table 4-2]

**Table 4-2**

| | | | Ex.6D | Comp.Ex.3D |
|---|---|---|---|---|
| Structure /Material | Substrate layer | Material | PE | PE |
| | | Thickness (µm) | 25 | 25 |
| | | Crystallinity (%) | 58.5 | 14.8 |
| | | In-plane diffraction peak | Present | Absent |
| | | Haze (%) | 1.6 | 21.5 |
| | 1st adhesive agent layer | Material | Urethane-based adhesive | Urethane-based adhesive |
| | Inorganic compd. Layer | Material | Absent | Absent |
| | | Thickness (nm) | - | - |
| | Intermediate layer | Material | PE | PE |
| | | Thickness (µm) | 25 | 25 |
| | | Crystallinity (%) | 58.5 | 58.5 |
| | | In-plane diffraction peak | Present | Present |
| | | Haze (%) | 1.6 | 1.6 |
| | Printed layer | Presence or absence | Present | Present |
| | 2nd adhesive agent layer | Material | Urethane-based adhesive | Urethane-based adhesive |
| | Sealant layer | Material | LLDPE | LLDPE |
| Evaluation / result | | Sealing property | A | B |
| | | Heat resistance (170°C) | A | B |
| | | Visibility | A | B |
| | | Puncture resistance (N) | 9.1 | 8.2 |

As shown in Table 4-1 and Table 4-2, the laminate in which the crystallinity of the substrate layer was 35% or more had good sealing property and heat resistance. The laminate in which the crystallinity of the substrate layer and the intermediate layer was 35% or more was also excellent in visibility and puncture resistance. On the other hand, the laminates in which the cristallinity of the substrate layer was less than 35% had insufficient sealing property, heat resistance, and visibility.

### (5) Test E

### (5.1) Production of laminate

### (5.1.1) Example 1E

The laminate 10E illustrated in FIG. 6 was produced by the following method. Note that, in this example, an anchor coat layer was further provided between the intermediate layer 8 and the gas barrier layer 5, and an inorganic compound layer and a coating layer were provided as the gas barrier layer 5.

First, an anchor coat agent, a coating liquid for forming a coating layer, and a coating solution for forming a protective layer were prepared by the same method as in Example 1B. In this example, as in Example 1B, the protective layer and the coating layer were formed using the same coating liquid.

A polyethylene film having a thickness of 25 µm, a crystallinity of 58.5%, a haze of 1.6%, and a density of 0.94 g/cm³ was prepared as a substrate layer and an intermediate layer. The crystallinity shown in the present example and the examples and comparative examples described below was measured by the measurement method described above.

Next, one surface of the substrate layer was subjected to a corona treatment. Subsequently, the coating liquid for forming a protective layer prepared as described above was applied to the corona-treated surface of the substrate layer by a gravure coating method and dried to form a protective layer including an organic-inorganic mixture and having a thickness of 0.5 µm.

Next, the other surface of the substrate layer was subjected to a corona treatment. Subsequently, the surface of the substrate layer subjected to the corona treatment was pattern-printed with an aqueous flexo ink to form a printed layer.

One surface of the intermediate layer was subjected to a corona treatment. Subsequently, the anchor coat agent described above was applied to the corona-treated surface of the intermediate layer by a gravure coating method to form an anchor coat layer having a thickness of 0.1 µm (dry state).

Subsequently, a silicon oxide (SiOₓ) evaporated film was formed as an inorganic compound layer on the anchor coat layer so as to have a thickness of 40 nm using an electron beam heating vacuum deposition apparatus. Subsequently, the coating liquid for forming a coating layer prepared as described above was applied to the inorganic compound layer to form a coating layer composed of an organic-inorganic mixture and having a thickness of 0.3 µm (dry state).

Next, an adhesive for dry lamination (urethane-based adhesive) was applied to the surface of the intermediate layer opposite to the surface on which the inorganic compound layer was formed to form a first adhesive agent layer. The substrate layer and the intermediate layer were bonded to each other such that the printed layer and the intermediate layer faced each other with the first adhesive agent layer interposed therebetween.

Next, a linear low-density polyethylene resin (LLDPE) film (thickness: 60 µm) was prepared as a sealant layer. An adhesive for dry lamination (urethane-based adhesive) was applied onto the sealant layer to form a second adhesive agent layer. The substrate layer and the sealant layer were bonded to each other such that the sealant layer and the coating layer faced each other with the second adhesive agent layer interposed therebetween.

The laminate was prepared as described above.

### (5.1.2) Example 2E

The laminate 10E illustrated in FIG. 6 was produced in the same manner as in Example 1E except for the following. In other words, instead of using the above-mentioned polyethylene film having a crystallinity of 58.5%, a polyethylene film having a thickness of 25 um, a crystallinity of 55.9%, a haze of 5.9%, and a density of 0.95 g/cm³ was used as the substrate layer and the intermediate layer. This polyethylene film is subjected to corona treatment on one side.

### (5.1.3) Example 3E

The laminate 10E illustrated in FIG. 6 was produced in the same manner as in Example 2E except for the following. That is, the protective layer was not provided. Furthermore, instead of using the above-mentioned polyethylene film having a crystallinity of 55.9%, a polyethylene film having a thickness of 25 µm, a crystallinity of 27.5%, a haze of 21.5%, and a density of 0.950 g/cm³ was used as the intermediate layer. This polyethylene film is subjected to corona treatment on one side.

### (5.1.4) Comparative Example 1E

The laminate 10E illustrated in FIG. 6 was produced in the same manner as in Example 1E except for the following. That is, the protective layer was not provided. Further, as the substrate layer and the intermediate layer, instead of using the above-mentioned polyethylene film having a crystallinity of 58.5%, a polyethylene film having a thickness of 25 µm, a crystallinity of 27.5%, a haze of 21.5%, and a density of 0.950 g/cm³ was used. This polyethylene film is subjected to corona treatment on one side.

### (5.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

In addition, the sealing property, heat resistance, visibility, puncture resistance, and recyclability of the laminate were evaluated. Methods for evaluating sealing property, heat resistance, visibility, puncture resistance, and recyclability will be described below.

### (5.2.1) Method for evaluating sealing property

The sealing property (heat resistance) were evaluated by the method described in (2.2.1).

### (5.2.2) Method for evaluating heat resistance

The heat resistance was evaluated by the method described in (2.2.2).

### (5.2.3) Method for evaluating visibility

The visibility was evaluated by the method described in (1.2.3).

### (5.2.4) Method for evaluating puncture resistance

The puncture resistance was evaluated by the method described in (4.2.4).

### (5.2.5) Method for evaluating recyclability

The recyclability was evaluated by the method described in (2.2.4).

### (5.3) Results

The results of the above measurement and evaluation are summarized in Table 5 below.

### [Table 5]

**Table 5**

| | | | Ex.1E | Ex.2E | Ex.3E | Comp.Ex.1E |
|---|---|---|---|---|---|---|
| | Protective layer | Material | Organic-inorganic mixture | Organic-inorganic mixture | Absent | Absent |
| | | Thickness (µm) | 0.5 | 0.5 | - | - |
| | Substrate layer | Material | PE | PE | PE | PE |
| | | Thickness (µm) | 25 | 25 | 25 | 25 |
| | | Crystallinity (%) | 58.5 | 55.9 | 55.9 | 27.5 |
| | | In-plane diffraction peak | Present | Absent | Absent | Absent |
| | | Haze (%) | 1.6 | 5.9 | 5.9 | 21.5 |
| | Printed layer | Presence or absence | Present | Present | Present | Present |
| | 1st adhes ive agent layer | Material | Urethane-based adhesive | Urethane-based adhesive | Urethane-based adhesive | Urethane-based adhesive |
| | Intermediate layer | Material | PE | PE | PE | PE |
| | | Thickness (µm) | 25 | 25 | 25 | 25 |
| Structure /Material | | Crystallinity (%) | 58.5 | 55.9 | 27.5 | 27.5 |
| | | In-plane diffraction peak | Present | Absent | Absent | Absent |
| | | Haze (%) | 1.6 | 5.9 | 21.5 | 21.5 |
| | Anchor coat layer | Material | Polyester-based polyurethane resin | Polyester-based polyurethane resin | Polyester-based polyurethane resin | Polyester-based polyurethane resin |
| | | Thickness (µm) | 0.1 | 0.1 | 0.1 | 0.1 |
| | Inorganic compd. Layer | Material | Silicon oxide | Silicon oxide | Silicon oxide | Silicon oxide |
| | | Thickness (nm) | 40 | 40 | 40 | 40 |
| | Corting layer | Material | Organic-inorganic mixture | Organic-inorganic mixture | Organic-inorganic mixture | Organic-inorganic mixture |
| | | Thickness (µm) | 0.3 | 0.3 | 0.3 | 0.3 |
| | 2nd adhesive agent layer | Material | Urethane-based adhesive | Urethane-based adhesive | Urethane-based adhesive | Urethane-based adhesive |
| | Sealant layer | Material | LLDPE | LLDPE | LLDPE | LLDPE |
| | | Thickness (µm) | 60 | 60 | 60 | 60 |
| Evaluation / result | | Sealing property | A | A | B | B |
| | | Heat resistance (170°C) | A | A | A | B |
| | | Heat resistance (190°C) | A | A | - | - |
| | | Visibility | A | A | A | B |
| | | Puncture resistance (N) | 9.6 | 9.3 | 7.5 | 5 |
| | | Recyclability | A | A | A | A |
| | | Polyethylene ratio (mass%) | 92 | 92 | 92 | 92 |

As shown in Table 5, the heat resistance, visibility, and puncture resistance of the laminate in which the crystallinity of the substrate layer was 35% or more were all good. In addition, the laminate in which the crystallinity of the substrate layer and the intermediate layer was 35% or more and the protective layer was provided also had excellent sealing property, and the puncture resistance was further improved. On the other hand, the crystallinity of the substrate layer was less than 35%, and the laminate including no protective layer was insufficient in sealing property, heat resistance, visibility, and puncture resistance.

### (6) Test F

### (6.1) Production of laminate

### (6.1.1) Example 1F

The laminate 10F illustrated in FIG. 7 was produced by the following method. Note that, in this example, an anchor coat layer was further provided between the intermediate layer 8 and the gas barrier layer 5, and an inorganic compound layer and a coating layer were provided as the gas barrier layer 5.

First, an anchor coat agent, a coating liquid for forming a coating layer, and a coating solution for forming a protective layer were prepared by the same method as in Example 1B. In this example, as in Example 1B, the protective layer and the coating layer were formed using the same coating liquid.

As a substrate layer, a polyethylene film having a thickness of 25 µm, a crystallinity of 58.5%, and a density of 0.950 g/cm³ was prepared. This polyethylene film is subjected to corona treatment on one side. The crystallinity shown in the present example and the examples and comparative examples described below was measured by the measurement method described above.

Next, one surface of the substrate layer was subjected to a corona treatment. Subsequently, the coating liquid for forming a protective layer prepared as described above was applied to the corona-treated surface of the substrate layer by a gravure coating method and dried to form a protective layer including an organic-inorganic mixture and having a thickness of 0.5 um.

Next, the other surface of the substrate layer was subjected to a corona treatment. Subsequently, the surface of the substrate layer subjected to the corona treatment was pattern-printed with an aqueous flexo ink to form a printed layer.

Next, a polyethylene film having a thickness of 25 pm, a crystallinity of 27.5%, and a density of 0.950 g/cm³ was prepared as the intermediate layer. This polyethylene film is subjected to corona treatment on one side.

The anchor coat agent described above was applied by a gravure coating method to form an anchor coat layer having a thickness of 0.1 µm (dry state).

Subsequently, as an inorganic compound layer, a silicon oxide (SiOₓ) evaporated film was formed on the anchor coat layer so as to have a thickness of 40 nm. Subsequently, the coating liquid for forming a coating layer prepared as described above was applied to the inorganic compound layer to form a coating layer composed of an organic-inorganic mixture and having a thickness of 0.3 µm (dry state).

Next, an adhesive for dry lamination (urethane-based adhesive) was applied to the surface of the intermediate layer opposite to the surface on which the inorganic compound layer was formed to form a first adhesive agent layer. The substrate layer and the intermediate layer were bonded to each other such that the printed layer and the intermediate layer faced each other with the first adhesive agent layer interposed therebetween.

Next, a linear low-density polyethylene resin (LLDPE) film (thickness: 60 µm) was prepared as a sealant layer. An adhesive for dry lamination (urethane-based adhesive) was applied onto the sealant layer to form a second adhesive agent layer. The substrate layer and the sealant layer were bonded to each other such that the sealant layer and the coating layer faced each other with the second adhesive agent layer interposed therebetween.

The laminate was prepared as described above.

### (6.1.2) Example 2F

The laminate 10F illustrated in FIG. 7 was produced in the same manner as in Example 1F except for the following. In other words, instead of using the above-mentioned polyethylene film having a crystallinity of 58.5%, a polyethylene film having a thickness of 25 µm, a crystallinity of 55.9%, a haze of 21.5%, and a density of 0.95 g/cm³ was used as the substrate layer. This polyethylene film is subjected to corona treatment on one side.

### (6.1.3) Example 3F

The laminate 10F illustrated in FIG. 7 was produced in the same manner as in Example 1F except for the following. That is, the protective layer was not provided. Further, instead of using the above-mentioned polyethylene film having a crystallinity of 58.5% as the substrate layer and the above-mentioned polyethylene film having a crystallinity of 27.5% as the intermediate layer, a polyethylene film having a thickness of 25 µm, a crystallinity of 55.9%, and a density of 0.95 g/cm³ was used. This polyethylene film is subjected to corona treatment on one side.

### (6.1.4) Comparative Example 1F

The laminate 10F illustrated in FIG. 7 was produced in the same manner as in Example 1F except for the following. That is, the protective layer was not provided. Furthermore, instead of using the above-mentioned polyethylene film having a crystallinity of 58.5%, a polyethylene film having a thickness of 25 µm, a crystallinity of 27.5%, and a density of 0.950 g/cm³ was used as the substrate layer. This polyethylene film is subjected to corona treatment on one side. Furthermore, instead of using the above-mentioned polyethylene film having a crystallinity of 27.5%, a polyethylene film having a thickness of 25 µm, a crystallinity of 55.9%, and a density of 0.95 g/cm³ was used as the intermediate layer. This polyethylene film is subjected to corona treatment on one side.

### (6.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

The laminate was evaluated for sealing property, heat resistance, drop resistance, and recyclability. Methods for evaluating sealing property, heat resistance, drop resistance, and recyclability will be described below.

### (6.2.1) Method for evaluating sealing property

The sealing property was evaluated by the method described in (2.2.1).

### (6.2.2) Method for evaluating heat resistance

The heat resistance was evaluated by the method described in (2.2.2).

### (6.2.3) Method for evaluating drop resistance

The laminate was cut into a predetermined size, and the peripheral edge portion was heat-sealed to produce ten bags. These bags were provided with openings for containing contents. The bags had a size of 100 mm × 150 mm. Next, each bag was filled with 200 mL of tap water, and the opening was heat-sealed to obtain a packaged article. Next, each packaged article was stored at 5°C for one day, and then dropped 50 times from a height of 1.5 m. The ratio of the number of packaged articles whose bags were broken within 50 times to the total number of packaged articles (10) was determined as the drop resistance.

### (6.2.4) Method for evaluating recyclability

The recyclability was evaluated by the method described in (2.2.4).

### (6.3) Results

The results of the above measurement and evaluation are summarized in Table 6 below.

### [Table 6]

**Table 6**

| | | | Ex.1F | Ex.2F | Ex.3F | Comp.Ex.1F |
|---|---|---|---|---|---|---|
| Structure /Material | Protective layer | Material | Organic-inorganic mixture | Organic-inorganic mixture | Absent | Absent |
| | | Thickness (µm) | 0.5 | 0.5 | - | - |
| | Substrate layer | Material | PE | PE | PE | PE |
| | | Thickness (µm) | 25 | 25 | 25 | 25 |
| | | Crystallinity (%) | 58.5 | 55.9 | 55.9 | 27.5 |
| | | In-plane diffraction peak | Present | Absent | Absent | Absent |
| | Printed layer | Presence or absence | Present | Present | Present | Present |
| | 1st adhesive agent layer | Material | Urethane-based adhesive | Urethane-based adhesive | Urethane-based adhesive | Urethane-based adhesive |
| | Intermediate layer | Material | PE | PE | PE | PE |
| | | Thickness (µm) | 25 | 25 | 25 | 25 |
| | | Crystallinity (%) | 27.5 | 27.5 | 55.9 | 55.9 |
| | | In-plane diffraction peak | Absent | Absent | Absent | Absent |
| | Anchor coat layer | Material | Polyester-based polyurethane resin | Polyester-based polyurethane resin | Polyester-based polyurethane resin | Polyester-based polyurethane resin |
| | | Thickness (µm) | 0.1 | 0.1 | 0.1 | 0.1 |
| | inorganic compd. Layer | Material | Silicon oxide | Silicon oxide | Silicon oxide | Silicon oxide |
| | | Thickness (nm) | 40 | 40 | 40 | 40 |
| | Corting layer | Material | Organic-inorganic mixture | Organic-inorganic mixture | Organic-inorganic mixture | Organic-inorganic mixture |
| | | Thickness (µm) | 0.3 | 0.3 | 0.3 | 0.3 |
| | 2nd adhesive agent layer | Material | Urethane-based adhesive | Urethane-based adhesive | Urethane-based adhesive | Urethane-based adhesive |
| | Sealant layer | Material | LLDPE | LLDPE | LLDPE | LLDPE |
| Evaluation / result | | Sealing property | A | A | B | B |
| | | Heat resistance (170°C) | A | A | A | B |
| | | Heat resistance (190°C) | A | A | - | - |
| | | Drop resistance | 0/10 | 0/10 | 8/10 | 7/10 |
| | | Recyclability | A | A | A | A |
| | | Polyethylene ratio (mass%) | 92 | 92 | 92 | 92 |

As shown in Table 6, the laminates in which the substrate layer had a crystallinity of 35% or more had good heat resistance while having recyclability. In addition, the crystallinity of the substrate layer was 35% or more, the crystallinity of the intermediate layer was less than 35%, and the laminate including the protective layer was also excellent in sealing property and drop resistance. On the other hand, the crystallinity of the substrate layer was less than 35%, and the laminate not including the protective layer was insufficient in sealing property, heat resistance, and drop resistance.

### (7) Test G

### (7.1) Production of laminate

### (7.1.1) Example 1G

The laminate 10G illustrated in FIG. 8 was produced by the following method. Note that, in this example, an anchor coat layer was further provided between the intermediate layer 8 and the inorganic compound layer 5.

First, a coating liquid for forming an anchor coat layer and a coating solution for forming a coating layer were prepared by the same method as in Example 1B.

In addition, as a coating liquid for forming a protective layer, an organic solvent solution of a polyamideimide resin (nonvolatile component concentration: 5% by mass) was prepared.

A polyethylene film having a thickness of 25 um, a crystallinity of 58.5%, a haze of 1.6%, and a density of 0.950 g/cm³ was prepared as the substrate layer and the intermediate layer. This polyethylene film has a threelayer structure (HDPE/MDPE/HDPE), and is subjected to a double-sided corona treatment. The crystallinity shown in the present example and the examples and comparative examples described below was measured by the measurement method described above.

Next, the coating liquid for forming a protective layer prepared as described above was applied to one surface of the substrate layer subjected to the corona treatment by a gravure coating method and dried to form a protective layer having a thickness of 0.5 µm. Subsequently, the other corona-treated surface of the substrate layer was pattern-printed with an aqueous flexo ink to form a printed layer.

Next, the anchor coat agent described above was applied to one surface of the intermediate layer subjected to the corona treatment by a gravure coating method to form an anchor coat layer having a thickness of 0.1 µm (dry state).

Next, as an inorganic compound layer, a transparent silicon oxide (SiOₓ) evaporated film was formed on the anchor coat layer so as to have a thickness of 40 nm by a vacuum deposition apparatus by an electron beam heating method. The O/Si ratio of the evaporated film was set to 1.8 by adjusting the type of material used for deposition or the like.

Subsequently, the coating liquid for forming a coating layer prepared as described above was applied to the inorganic compound layer to form a coating layer composed of an organic-inorganic mixture and having a thickness of 0.3 µm (dry state).

Next, an adhesive for dry lamination (urethane-based adhesive) was applied to the surface of the intermediate layer opposite to the surface on which the inorganic compound layer was formed to form a first adhesive agent layer. The substrate layer and the intermediate layer were bonded to each other such that the printed layer and the intermediate layer faced each other with the first adhesive agent layer interposed therebetween.

Next, a linear low-density polyethylene resin (LLDPE) film (thickness: 60 µm) was prepared as a sealant layer. An adhesive for dry lamination (urethane-based adhesive) was applied onto the sealant layer to form a second adhesive agent layer. The substrate layer and the sealant layer were bonded to each other such that the sealant layer and the coating layer faced each other with the second adhesive agent layer interposed therebetween.

The laminate was prepared as described above.

### (7.1.2) Example 2G

The laminate 10G illustrated in FIG. 8 was produced by the same method as in Example 1G except that the thickness of the protective layer was changed from 0.5 µm to 1 µm.

### (7.1.3) Example 3G

The laminate 10G illustrated in FIG. 8 was produced by the same method as in Example 1G except that the thickness of the protective layer was changed from 0.5 um to 3 µm.

### (7.1.4) Example 4G

The laminate 10G illustrated in FIG. 8 was produced in the same manner as in Example 1G except for the following. That is, the protective layer was not provided. Further, as the intermediate layer, a polyethylene film having a thickness of 25 µm, a crystallinity of 27.6%, and a haze of 21.5% was used instead of the polyethylene film having a crystallinity of 58.5%.

### (7.1.5) Comparative Example 1G

The laminate 10G illustrated in FIG. 8 was produced in the same manner as in Example 1G except for the following. That is, the protective layer was not provided. Furthermore, as the substrate layer and the intermediate layer, a polyethylene film having a thickness of 25 µm and a crystallinity of 27.6% was used instead of the polyethylene film having a crystallinity of 58.5% described above.

### (7.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

In addition, the sealing property, heat resistance, visibility, puncture resistance, and recyclability of the laminate were evaluated. Methods for evaluating sealing property, heat resistance, visibility, puncture resistance, and recyclability will be described below.

### (7.2.1) Method for evaluating sealing property

The sealing property was evaluated by the method described in (1.2.1).

### (7.2.2) Method for evaluating heat resistance

The heat resistance was evaluated by the method described in (2.2.2).

### (7.2.3) Method for evaluating visibility

The visibility was evaluated by the method described in (1.2.3) .

### (7.2.4) Method for evaluating puncture resistance

The puncture resistance was evaluated by the method described in (4.2.4).

### (7.2.5) Method for evaluating recyclability

The recyclability was evaluated by the method described in (2.2.4).

### (7.3) Results

The results of the above measurement and evaluation are summarized in Table 7 below.

### [Table 7]

**Table 7**

| | | | Ex.1G | Ex.2G | Ex.3G |
|---|---|---|---|---|---|
| Structure /Material | Protective layer | Material | Polyamideimide resin | Polyamideimide resin | Polyamideimide resin |
| | | Thickness (µm) | 0.5 | 1 | 3 |
| | Substrate layer | Material | PE | PE | PE |
| | | Thickness (µm) | 25 | 25 | 25 |
| | | Crystallinity (%) | 58.5 | 58.5 | 58.5 |
| | | In-plane diffraction peak | Present | Present | Present |
| | | Haze (%) | 1.6 | 1.6 | 1.6 |
| | Printed layer | Presence or absence | Present | Present | Present |
| | 1st adhesive agent layer | Material | Urethane-based adhesive | Urethane-based adhesive | Urethane-based adhesive |
| | Intermediate layer | Material | PE | PE | PE |
| | | Thickness (µm) | 25 | 25 | 25 |
| | | Crystallinity (%) | 58.5 | 58.5 | 58.5 |
| | | In-plane diffraction peak | Present | Present | Present |
| | | Haze (%) | 1.6 | 1.6 | 1.6 |
| | Anchor coat layer | Material | Polyester-based polyurethane resin | Polyester-based polyurethane resin | Polyester-based polyurethane resin |
| | | Thickness (µm) | 0.1 | 0.1 | 0.1 |
| | Inorganic compd. Layer | Material | Silicon oxide | Silicon oxide | Silicon oxide |
| | | Thickness (nm) | 40 | 40 | 40 |
| | Corting layer | Material | Organic-inorganic mixture | Absent | Organic-inorganic mixture |
| | | Thickness (µm) | 0.3 | - | 0.3 |
| | 2nd adhesive agent layer | Material | Urethane-based adhesive | Urethane-based adhesive | Urethane-based adhesive |
| | Sealant layer | Material | LLDPE | LLDPE | LLDPE |
| | | Thickness (µm) | 60 | 60 | 60 |
| Evaluation / result | | Sealing property | A | A | A |
| | | Heat resistance (170°C) | A | A | A |
| | | Heat resistance (190°C) | A | A | A |
| | | Visibility | A | A | A |
| | | Puncture resistance (N) | 9.6 | 9.3 | 9.3 |
| | | Recyclability | A | A | A |
| | | Polyethylene ratio (mass%) | 92 | 92 | 92 |

| | | | Ex.4G | Comp.Ex.1G |
|---|---|---|---|---|
| Structure /Material | Protective layer | Material | Absent | Absent |
| | | Thickness (µm) | - | - |
| | Substrate layer | Material | PE | PE |
| | | Thickness (µm) | 25 | 25 |
| | | Crystallinity (%) | 58.5 | 27.6 |
| | | In-plane diffraction peak | Present | Absent |
| | | Haze (%) | 1.6 | 21.5 |
| | Printed layer | Presence or absence | Present | Present |
| | 1st adhesive agent layer | Material | Urethane-based adhesive | Urethane-based adhesive |
| | Intermediate layer | Material | PE | PE |
| | | Thickness (µm) | 25 | 25 |
| | | Crystallinity (%) | 27.6 | 27.6 |
| | | In-plane diffraction peak | Absent | Absent |
| | | Haze (%) | 21.5 | 21.5 |
| | Anchor coat layer | Material | Polyester-based polyurethane resin | Polyester-based polyurethane resin |
| | | Thickness (µm) | 0.1 | 0.1 |
| | Inorganic compd. Layer | Material | Silicon oxide | Silicon oxide |
| | | Thickness (nm) | 40 | 40 |
| | Corting layer | Material | Organic-inorganic mixture | Organic-inorganic mixture |
| | | Thickness (µm) | 0.3 | 0.3 |
| | 2nd adhesive agent layer | Material | Urethane-based adhesive | Urethane-based adhesive |
| | Sealant layer | Material | LLDPE | LLDPE |
| | | Thickness (µm) | 60 | 60 |
| Evaluation / result | | Sealing property | B | B |
| | | Heat resistance (170°C) | A | B |
| | | Heat resistance (190°C) | - | - |
| | | Visibility | A | B |
| | | Puncture resistance (N) | 7.5 | 5 |
| | | Recyclability | A | A |
| | | Polyethylene ratio (mass%) | 92 | 92 |

As shown in Table 7, the laminates in which the substrate layer had a crystallinity of 35% or more were all satisfactory in heat resistance and visibility while having recyclability. In addition, the crystallinity of the substrate layer and the intermediate layer was 35% or more, and the laminates including the protective layer were also excellent in sealing property and puncture resistance. On the other hand, the crystallinity of the substrate layer was less than 35%, and the laminate including no protective layer was insufficient in sealing property, heat resistance, visibility, and puncture resistance.

### (8) Test G

### (8.1) Production of laminate

### (8.1.1) Example 1H

The laminate 10H illustrated in FIG. 9 was produced by the following method. Note that, in this example, an anchor coat layer was further provided between the intermediate layer 8 and the inorganic compound layer 5.

First, a coating liquid for forming an anchor coat layer and a coating solution for forming a coating layer were prepared by the same method as in Example 1B.

In addition, as a coating liquid for forming a protective layer, an organic solvent solution of a polyamideimide resin (nonvolatile component concentration: 5% by mass) was prepared.

As a substrate layer, a polyethylene film having a thickness of 25 µm, a crystallinity of 58.5%, and a haze of 1.6% was prepared. This polyethylene film is subjected to a corona treatment on both sides. The crystallinity shown in the present example and the examples and comparative examples described below was measured by the measurement method described above.

Next, the coating liquid for forming a protective layer prepared as described above was applied to one surface of the substrate layer subjected to the corona treatment by a gravure coating method and dried to form a protective layer having a thickness of 0.5 µm. Subsequently, the other corona-treated surface of the substrate layer was pattern-printed with an aqueous flexo ink to form a printed layer.

As the intermediate layer, a polyethylene film having a thickness of 25 µm, a crystallinity of 27.6%, and a haze of 21.5% was prepared. This polyethylene film is subjected to a corona treatment on both sides. Next, the anchor coat agent described above was applied to one surface of the intermediate layer subjected to the corona treatment by a gravure coating method to form an anchor coat layer having a thickness of 0.1 µm (dry state).

Next, as an inorganic compound layer, a transparent silicon oxide (SiOₓ) evaporated film was formed on the anchor coat layer so as to have a thickness of 40 nm by a vacuum deposition apparatus by an electron beam heating method. The O/Si ratio of the evaporated film was set to 1.8 by adjusting the type of material used for deposition or the like.

Subsequently, the coating liquid for forming a coating layer prepared as described above was applied to the inorganic compound layer to form a coating layer composed of an organic-inorganic mixture and having a thickness of 0.3 µm (dry state).

Next, an adhesive for dry lamination (urethane-based adhesive) was applied to the surface of the intermediate layer opposite to the surface on which the inorganic compound layer was formed to form a first adhesive agent layer. The substrate layer and the intermediate layer were bonded to each other such that the printed layer and the intermediate layer faced each other with the first adhesive agent layer interposed therebetween.

Next, a linear low-density polyethylene resin (LLDPE) film (thickness: 60 µm) was prepared as a sealant layer. An adhesive for dry lamination (urethane-based adhesive) was applied onto the sealant layer to form a second adhesive agent layer. The substrate layer and the sealant layer were bonded to each other such that the sealant layer and the coating layer faced each other with the second adhesive agent layer interposed therebetween.

The laminate was prepared as described above.

### (8.1.2) Example 2H

The laminate 10H illustrated in FIG. 9 was produced by the same method as in Example 1H except that the thickness of the protective layer was changed from 0.5 µm to 1 µm and a coating layer was not provided.

### (8.1.3) Example 3H

The laminate 10H illustrated in FIG. 9 was produced by the same method as in Example 1H except that the thickness of the protective layer was changed from 0.5 µm to 3 µm.

### (8.1.4) Example 4H

The laminate 10H illustrated in FIG. 9 was produced in the same manner as in Example 1H, except for the following. That is, the protective layer was not provided. Further, as the intermediate layer, a polyethylene film having a thickness of 25 µm, a crystallinity of 58.5%, and a haze of 1.6% was used instead of the polyethylene film having a crystallinity of 27.6%. This polyethylene film is subjected to a corona treatment on both sides.

### (8.1.5) Comparative Example 1H

The laminate 10H illustrated in FIG. 9 was produced in the same manner as in Example 1H, except for the following. That is, the protective layer was not provided. Further, as the substrate layer, a polyethylene film having a thickness of 25 µm, a crystallinity of 27.6%, and a haze of 21.5% was used instead of the polyethylene film having a crystallinity of 58.5% described above. This polyethylene film is subjected to a corona treatment on both sides. Further, as the intermediate layer, a polyethylene film having a thickness of 25 um, a crystallinity of 58.5%, and a haze of 1.6% was used instead of the polyethylene film having a crystallinity of 27.6%. This polyethylene film is subjected to a corona treatment on both sides.

### (8.2) Measurement and evaluation method

The substrate layer and the intermediate layer used in the production of the laminate were subjected to in-plane measurement by the wide-angle X-ray diffraction method described above. Then, it was examined whether the diffraction pattern obtained by this measurement had a sharp diffraction peak corresponding to the (110) plane.

In addition, the laminate was evaluated for sealing property, heat resistance, visibility, drop resistance, and recyclability. Methods for evaluating sealing property, heat resistance, visibility, drop resistance, and recyclability will be described below.

### (8.2.1) Method for evaluating sealing property

The sealing property was evaluated by the method described in (1.2.1).

### (8.2.2) Method for evaluating visibility

The visibility was evaluated by the method described in (1.2.2).

### (8.2.3) Method for evaluating drop resistance

The drop resistance was evaluated by the method described in (6.2.3).

### (8.2.4) Method for evaluating recyclability

The recyclability was evaluated by the method described in (2.2.4).

### (8.3) Results

The results of the above measurement and evaluation are summarized in Table 8 below.

### [Table 8]

**Table 8**

| | | | Ex.1H | Ex.2H | Ex.3H |
|---|---|---|---|---|---|
| Structure /Material | Protective layer | Material | Polyamideimide resin | Polyamideimide resin | Polyamideimide resin |
| | | Thickness (µm) | 0.5 | 1 | 3 |
| | Substrate layer | Material | PE | PE | PE |
| | | Thickness (µm) | 25 | 25 | 25 |
| | | Crystallinity (%) | 58.5 | 58.5 | 58.5 |
| | | In-plane diffraction peak | Present | Present | Present |
| | | Haze (%) | 1.6 | 1.6 | 1.6 |
| | Printed layer | Presence or absence | Present | Present | Present |
| | 1st adhesive agent layer | Material | Urethane-based adhesive | Urethane-based adhesive | Urethane-based adhesive |
| | Intermediate layer | Material | PE | PE | PE |
| | | Thickness (µm) | 25 | 25 | 25 |
| | | Crystallinity (%) | 27.6 | 27.6 | 27.6 |
| | | In-plane diffraction peak | Absent | Absent | Absent |
| | | Haze (%) | 21.5 | 21.5 | 21.5 |
| | Anchor coat layer | Material | Polyester-based polyurethane resin | Polyester-based polyurethane resin | Polyester-based polyurethane resin |
| | | Thickness (µm) | 0.1 | 0.1 | 0.1 |
| | Inorganic compd. Layer | Material | Silicon oxide | Silicon oxide | Silicon oxide |
| | | Thickness (nm) | 40 | 40 | 40 |
| | Corting layer | Material | Organic-inorganic mixture | Absent | Organic-inorganic mixture |
| | | Thickness (µm) | 0.3 | - | 0.3 |
| | 2nd adhesive agent layer | Material | Urethane-based adhesive | Urethane-based adhesive | Urethane-based adhesive |
| | Sealant layer | Material | LLDPE | LLDPE | LLDPE |
| | | Thickness (µm) | 60 | 60 | 60 |
| Evaluation / result | | Sealing property | A | A | A |
| | | Heat resistance (170°C) | A | A | A |
| | | Heat resistance (190°C) | A | A | A |
| | | Visibility | A | A | A |
| | | Drop resistance | 0/10 | 0/10 | 0/10 |
| | | Recyclability | A | A | A |
| | | Polyethylene ratio (mass%) | 92 | 92 | 92 |

| | | | Ex.4H | Comp.Ex.1H |
|---|---|---|---|---|
| Structure /Material | Protective layer | Material | Absent | Absent |
| | | Thickness (µm) | - | - |
| | Substrate layer | Material | PE | PE |
| | | Thickness (µm) | 25 | 25 |
| | | Crystallinity (%) | 58.5 | 27.6 |
| | | In-plane diffraction peak | Present | Absent |
| | | Haze (%) | 1.6 | 21.5 |
| | Printed layer | Presence or absence | Present | Present |
| | 1st adhesive agent layer | Material | Urethane-based adhesive | Urethane-based adhesive |
| | Intermediate layer | Material | PE | PE |
| | | Thickness (µm) | 25 | 25 |
| | | Crystallinity (%) | 58.5 | 58.5 |
| | | In-plane diffraction peak | Present | Present |
| | | Haze (%) | 1.6 | 1.6 |
| | Anchor coat layer | Material | Polyester-based polyurethane resin | Polyester-based polyurethane resin |
| | | Thickness (µm) | 0.1 | 0.1 |
| | Inorganic compd. Layer | Material | Silicon oxide | Silicon oxide |
| | | Thickness (nm) | 40 | 40 |
| | Corting layer | Material | Organic-inorganic mixture | Organic-inorganic mixture |
| | | Thickness (µm) | 0.3 | 0.3 |
| | 2nd adhesive agent layer | Material | Urethane-based adhesive | Urethane-based adhesive |
| | Sealant layer | Material | LLDPE | LLDPE |
| | | Thickness (µm) | 60 | 60 |
| Evaluation / result | | Sealing property | B | B |
| | | Heat resistance (170°C) | A | B |
| | | Heat resistance (190°C) | | |
| | | Visibility | A | B |
| | | Drop resistance | 8/10 | 7/10 |
| | | Recyclability | A | A |
| | | Polyethylene ratio (mass%) | 92 | 92 |

As shown in Table 8, the laminates in which the substrate layer had a crystallinity of 35% or more were all satisfactory in heat resistance and visibility while having recyclability. In addition, the laminate having the substrate layer with the crystallinity of was 35% or more and the intermediate layer with the crystallinity of less than 35%, and including the protective layer were also excellent in sealing property and drop resistance. On the other hand, the laminate having the substrate layer with the crystallinity of less than 35% and having no protective layer is insufficient in sealing property, heat resistance, and visibility.

### REFERENCE SIGNS LIST

- 1: Substrate layer
- 2: Sealant layer
- 3: Adhesive agent layer
- 3A: First adhesive agent layer
- 3B: Second adhesive agent layer
- 4: Printed layer
- 5: Gas barrier layer (Inorganic compound layer)
- 6: Protective layer
- 7: Coating layer
- 8: Intermediate layer
- 10A1: Laminate
- 10A2: Laminate
- 10B: Laminate
- 10C: Laminate
- 10D: Laminate
- 10E: Laminate
- 10F: Laminate
- 10G: Laminate
- 10H: Laminate
- 100A: Packaged article
- 100B: Packaged article
- 100C: Packaged article
- 110A: Package
- 110B: Package
- 110C: Package
- 110C1: Container body
- 110C2: Spout member
- 110C3: Lid body

## Claims

1. A laminate comprising a substrate layer, an adhesive agent layer, and a sealant layer in this order,
the substrate layer and the sealant layer containing polyethylene,
the substrate layer having a crystallinity of 35% or more, the crystallinity being a ratio of a crystal peak area to a total peak area, the crystallinity being measured at a diffraction angle in a range of 10° to 30° by a parallel beam method of X-ray diffraction.

2. The laminate according to claim 1, further comprising an intermediate layer placed between the substrate layer and the sealant layer and containing polyethylene.

3. The laminate according to claim 2, wherein the intermediate layer has a crystallinity of 35% or more, the crystallinity being a ratio of a crystal peak area to a total peak area, the crystallinity being measured at a diffraction angle in a range of 10° to 30° by the parallel beam method of X-ray diffraction.

4. The laminate according to claim 2, wherein the intermediate layer has a crystallinity of less than 35%, the crystallinity being a ratio of a crystal peak area to a total peak area, the crystallinity being measured in a diffraction angle in a range of 10° to 30° by the parallel beam method of X-ray diffraction.

5. The laminate according to any one of claims 1 to 4, further comprising a protective layer as an outermost layer, the protective layer facing the sealant layer with the substrate layer placed between the protective layer and the sealant layer.

6. The laminate according to claim 5, wherein the protective layer contains a thermosetting resin.

7. The laminate according to any one of claims 1 to 6, wherein the substrate layer is a biaxially stretched film.

8. The laminate according to any one of claims 1 to 6, wherein the substrate layer is an uniaxially stretched film.

9. The laminate according to any one of claims 1 to 8, further comprising a gas barrier layer placed between the substrate layer and the sealant layer.

10. The laminate according to any one of claims 1 to 9, wherein the adhesive agent layer has a gas barrier property.

11. The laminate according to any one of claims 1 to 10, wherein the sealant layer is white.

12. The laminate according to any one of claims 1 to 11, wherein a ratio of polyethylene in the laminate is 90 mass% or more.

13. The laminate according to any one of claims 1 to 12, comprising a first adhesive agent layer and a second adhesive agent layer as the adhesive agent layer, the first adhesive agent layer being placed between the substrate layer and the intermediate layer, the second adhesive agent layer being placed between the intermediate layer and the sealant layer.

14. A package comprising the laminate according to any one of claims 1 to 13.

15. The package according to claim 14, the package being a standing pouch.

16. A packaged article comprising the package according to claim 14 or 15 and a content contained in the package.
